# EUROPÄISCHE PATENTSCHRIFT

(11) **EP 2 994 950 B1**
(45) Veröffentlichungstag und Bekanntmachung des Hinweises auf die Patenterteilung: **10.05.2017**
(21) Anmeldenummer: 14796676.6
(22) Anmeldetag: 16.10.2014
(51) Int. Cl.: H01M 8/18, H01M 8/0656

(54) **VORRICHTUNG UND VERFAHREN ZUR UMWANDLUNG VON THERMISCHER ENERGIE IN CHEMISCHE ENERGIE UND VON CHEMISCHER ENERGIE IN ELEKTRISCHE ENERGIE MIT CHEMISCHER ZWISCHENSPEICHERUNG**
DEVICE AND METHOD FOR CONVERTING THERMAL ENERGY INTO CHEMICAL ENERGY AND CHEMICAL ENERGY INTO ELECTRICAL ENERGY WITH INTERMEDIATE CHEMICAL STORAGE
DISPOSITIF ET PROCÉDÉ DE CONVERSION D'ÉNERGIE THERMIQUE EN ÉNERGIE CHIMIQUE ET D'ÉNERGIE CHIMIQUE EN ÉNERGIE ÉLECTRIQUE AVEC STOCKAGE INTERMÉDIAIRE CHIMIQUE

(30) Priorität: 17.10.2013 DE 102013017652; 08.03.2014 DE 102014003315
(43) Veröffentlichungstag der Anmeldung: 16.03.2016
(73) Patentinhaber: Technische Universität Bergakademie Freiberg, 09599 Freiberg (DE); Fraunhofer-Gesellschaft zur Förderung der angewandten Forschung e.V., 80686 München (DE)
(72) Erfinder: CHERKOUK, Charaf, 01324 Dresden (DE); FORMAN, Clemens, 09599 Freiberg (DE); SCHEITHAUER, David, 09131 Chemnitz (DE); GOOTZ, Matthias, 01157 Dresden (DE); HANZIG, Juliane, 09599 Freiberg (DE); HERRMANN, Marco, 01099 Dresden (DE); MEHNER, Erik, 01219 Dresden (DE); MEUTZNER, Falk, 01097 Dresden (DE); MEYER, Dirk C., 01326 Dresden (DE); MÜNCHGESANG, Wolfram, 06110 Halle (DE); MURITALA, Ibrahim, 09599 Freiberg (DE); NENTWICH, Melanie, 09599 Freiberg (DE); NESTLER, Tina, 01665 Seeligstadt (DE); SCHMID, Robert, 01099 Dresden (DE); SONNTAG, Maximilian, 09599 Freiberg (DE); LEISEGANG, Tilmann, 01097 Dresden (DE); WUNDERWALD, Ulrike, 09599 Freiberg (DE); STÖCKER, Hartmut, 09599 Freiberg (DE); STÖRR, Bianca, 09693 Grossschirma (DE); URENA DE VIVANCO, Mateo, 01099 Dresden (DE); ZSCHORNAK, Matthias, 01326 Dresden (DE)
(74) Vertreter: Rauschenbach, Marion
(86) Internationale Anmeldenummer: PCT/DE2014/000531
(87) Internationale Veröffentlichungsnummer: WO 2015/055173

(56) Entgegenhaltungen:
- EP-A1- 2 523 245
- CA-A1- 2 694 153
- DE-A1-102011 004 404

## Beschreibung

Die Erfindung betrifft eine Vorrichtung und ein Verfahren zur Umwandlung von thermischer Energie in chemische Energie und von chemischer Energie in elektrische Energie mit chemischer Zwischenspeicherung in Verbindung mit einer Energiewandlung und Stoffwandlung mittels pyrokatalytisch wirksamer Materialien unter Nutzung von Rest- oder Abwärme, wobei einerseits in einem Fluidreservoir durch einen extern verfügbaren (Ab-)Wärmestrom oder andererseits aus internen Temperaturfluktuationen aus einem Fluid, also einer Flüssigkeit oder einem Gas, durch die pyrokatalytische Wirksamkeit am pyrokatalytisch wirksamen Material Wasserstoff erzeugt wird, welcher seinerseits über einen Gasdiffusionskanal einer Brennstoffzelleneinheit zugeführt wird und für die Brennstoffzelfenreaktion zur Verfügung steht, in deren Folge Wasser gebildet wird und so die Brennstoffzelle einen elektrischen Strom generiert.

Die Erfindung kann in verschiedenen Bereichen angewendet werden. Das entscheidende Kriterium besteht in der Nutzung von anfallender Abwärme. In Frage kommen besonders die zentrale und dezentrale bzw. autarke Erzeugung elektrischer Energie (Kraftwerke und Solar- bzw. Geothermie), sämtliche Prozesse im Chemie- und Anlagenbau (Industrieanlagen), in der Grundstoffindustrie (z. B. Stahl- und Schwerindustrie) sowie gewerbliche Einrichtungen verschiedener Branchen (z. B. Bäckereien, Kühlhäuser, Textilwäschereien, Rechenzentren) und Eigenheime. Eine Nutzung der Erfindung für Brennstoffzellen, die bei Temperaturen oberhalb von etwa Raumtemperatur betrieben werden, stellt eine weitere mögliche Anwendungsoption dar.

Nach Schätzungen verschiedener Energieagenturen und Institutionen gehen heute weltweit mehr als 50 % des für die technische Nutzung gewandelten Energieaufkommens in Form von Abwärme verloren. Die Entwicklung technisch und wirtschaftlich vertretbarer Verfahren zur Nutzbarmachung von Niedertemperaturabwärme ist demnach in großer Breite von entscheidender Bedeutung für die Erhöhung der Prozesswirkungsgrade und somit auch der Energieeffizienz. Ziel der Erfindung ist es, diese Abwärme - insbesondere in Form von in herkömmlichen Anlagen nicht mehr arbeitsfähiger Niedertemperaturabwärme - nutzbar zu machen. Bedingt durch die absehbare Verknappung des fossilen Rohstoffs Erdöl und die drohende Änderung des Weltklimas, sind neue Ansätze im Energiesektor und in den Industriebranchen mit hohem Bedarf an Energie notwendig. Die Verluste nutzbarer Energie in Form von Niedertemperaturabwärme treten außerhalb der bedeutsamen Erzeugung elektrischer Energie in ganz vielfältigen Zusammenhängen auf. Dies betrifft etwa Kraftwerke, Fahrzeugmotoren oder die Schwerindustrie, elektrochemische Speicher, insbesondere auch Brennstoffzellen, wobei die beim Auf- und Entladen erzeugte Abwärme eine der wesentlichsten Formen nicht nutzbarer Energieanteile darstellt, oder die Materialsynthese und Materialaufreinigung (z. B. von Stahl und Chemikalien) bis hin zu Rechenzentren und mobilen technischen Geräten.

Die elektrische Energie ist neben der Wärmeenergie eine der bedeutendsten Energieformen, die der Mensch nutzt. Sie kann in Form von Elektrizität auch über große Entfernungen einfach bereitgestellt und übertragen werden. Eine zunehmend an Bedeutung gewinnende Quelle elektrischer Energie stellt die Stromerzeugung aus sogenannten nichtfossilen, regenerativen Energieträgern dar. Diese Energieträger sind in erster Linie Sonnenstrahlung und Wind. Aufgrund ihres natürlich bedingten schwankenden Angebots liefern sie keine kontinuierliche elektrische Energie und sind damit nicht grundlastfähig. Werden diese regenerativen Energieträger zu Lasten etablierter, meist jedoch weniger umweltfreundlicher Energieträger, verstärkt ausgebaut und genutzt, muss die fehlende Grundlastfähigkeit kompensiert werden. Dies kann durch Speicherung erfolgen. Eine Möglichkeit stellt die Umwandlung in andere Energieformen (mechanische, elektrische, chemische und thermische) und ihre darauffolgende Stabilisierung dar. Die Umsetzung ist bisher noch nicht ausreichend erfolgt. Sie ist verlustbehaftet und erfordert die Kombination komplexer Materialien. Die hier vorgestellte Erfindung, die zum verlängerten Betrieb eines speziellen Energiewandlers/Energiespeichers, einer Brennstoffzelle, genutzt werden kann und überhaupt thermische Energie in chemische Energie sowie diese chemische Energie dann in elektrische Energie umwandelt, möchte dies lösen.

Die Notwendigkeit der Zwischenspeicherung ergibt sich auch daher, dass die in das Stromnetz eingespeiste elektrische Energie meist nicht der aktuell entnommenen entspricht, welche selbst Schwankungen unterliegt. Zwischen Angebot und Nachfrage muss kontinuierlich ein Gleichgewicht herrschen. Das Netz selbst kann Überschüsse oder Defizite nicht auffangen, daher ist eine Zwischenspeicherung im Sekundenbereich bis hin zur Langzeitspeicherung erforderlich.

Unter den oben genannten Aspekten sind daher Systeme von besonderem Reiz, die sowohl thermische Energie, vorzugsweise aus Niedertemperaturabwärme, über chemische Energie zur Erzeugung von elektrischer Energie nutzen, als auch die chemische Energieform zur Zwischenspeicherung verwenden.

Im Bereich der Elektroenergieerzeugung aus Niedertemperaturabwärme existieren lediglich der Organic-Rankine-Cycle (ORC) Prozess und der Stirling-Motor als kommerziell verfügbare Verfahren. Beim ORC-Prozess werden für den Betrieb einer Dampfturbine organische Arbeitsmittel herangezogen, die einen geringeren Siedepunkt als Wasser besitzen. Somit kann die Wärmezufuhr in diesem thermodynamischen Kreislauf insgesamt auf niedrigerem Niveau erfolgen. Abwärmeströme unterhalb von 120°C lassen sich mit diesem Prozess jedoch nicht wirtschaftlich nutzen sowie die thermische Energie nicht speichern. Bei entsprechender Bauweise eines Stirling-Motors (z. B. Flachplatten-Stirling-Motor) wird dessen Betrieb schon bei geringen Temperaturdifferenzen von einigen Kelvin zwischen Wärmequelle und Wärmesenke ermöglicht Nachteil eines Stirling-Motors ist, dass keine Energie gespeichert werden kann.

Andere Verfahren, z. B. auf Basis von thermoelektrischen Materialien, sind insbesondere für geringe Temperaturdifferenzen, wie sie im Bereich der Niedertemperaturabwärme existieren, nicht kommerziell verfügbar und können die anfallende thermische Energie ebenfalls nicht speichern.

Die Brennstoffzelle ist ein Energiekonverter, welcher chemische in elektrische Energie wandelt. Sie besteht aus einem Elektrolyten und den beiden angrenzenden Elektroden. Die Anode wird im einfachsten Fall kontinuierlich mit Wasserstoff und die Luft-Kathode mit Sauerstoff versorgt. Die Erzeugung elektrischen Stroms aus chemischer Energie wird durch die Oxidation des Wasserstoffs und die Reduktion des Sauerstoffs gewährleistet. Wie in der Druckschrift A. Kirubakaran et al.: A review on fuel cell technologies and power electronic interfaces, Renewable and Sustainable Energy Reviews 13(9), 2430 (2009), beschrieben, existieren verschiedene Typen von Brennstoffzellen, die sich u. a. in ihren Brennstoffen, Elektrolyten, ihrer Arbeitstemperatur bzw. Leistungsdichte unterscheiden.

Polymerelektrolyt-Brennstoffzellen (PEFC) arbeiten bei Temperaturen im Bereich von 50 bis 100°C, können Leistungsdichten im Bereich von 3,8 bis 6,5 kW/m³ erreichen und verwenden Wasserstoff und Sauerstoff als chemische Energieträger. Eine feste Polymermembran (z. B. Nafion) dient als Elektrolyt. Vorteile dieser Technologie sind die hohe Leistungsdichte, ein nicht korrosiver Festkörperelektrolyt und die kurzen Anfahrzeiten. Nachteilig sind hingegen die hohen Kosten für den notwendigen Platinkatalysator und die hohe Sensitivität auf Verunreinigungen der Brennstoffe, wie z. B. CO oder H₂S.

Alkalische Brennstoffzellen (AFC) arbeiten im Temperaturbereich zwischen 50 und 200°C und erreichen Leistungsdichten von ca. 1 kW/m³. Die Generierung elektrischer Energie erfolgt ebenfalls aus den Gasen Wasserstoff und Sauerstoff mit flüssigem Kaliumhydroxid als Elektrolyt. Vorteilig sind hier ebenfalls die hohe Leistungsdichte und die kurzen Anfahrzeiten. Die teuren Platinkatalysatoren und die Sensitivität gegenüber Brennstoffverunreinigungen wie CO, CO₂, CH₄ oder H₂S gehören ebenfalls zu den Nachteilen.

Phosphorsäure-Brennstoffzellen (PAFC) besitzen eine Arbeitstemperatur von ca. 200°C und erreichen Leistungsdichten zwischen 0,8 und 1,9 kW/m³. Auch diese Technologie nutzt die Gase Wasserstoff und Sauerstoff als chemische Energieträger sowie Phosphorsäure (H₃PO₄) als Elektrolyt.

Schmelzcarbonat-Brennstoffzellen (MCFC) arbeiten bei ca. 650°C und weisen Leistungsdichten im Bereich von 1,5 bis 2,6 kW/m³ auf. Als chemische Energieträger werden auf Kathodenseite Sauerstoff und auf Anodenseite Wasserstoff, CO, CH₄ oder andere Kohlenwasserstoffe verwendet. Lithium- oder Kalium-Carbonate dienen als Elektrolyte. Vorteilig sind die hohe Effizienz und der Verzicht auf Metallkatalysatoren. Zu den Nachteilen gehören die großen Anfahrzeiten, korrosive Flüssigelektrolyte, vergleichsweise hohe Kosten und die Intoleranz gegenüber Schwefeleintrag.

Festoxidbrennstoffzellen (SOFC) arbeiten bei Temperaturen im Bereich von 800 bis 1000°C, erreichen Leistungsdichten im Bereich zwischen 0,1 und 1,5 kW/m³ und nutzen kathodenseitig Sauerstoff und anodenseitig Wasserstoff, CO, CH₄ oder andere Kohlenwasserstoffe als chemische Energieträger. Vorteile bilden der Festkörperelektrolyt (keine flüssigen Komponenten, die auslaufen könnten) und die hohe Effizienz. Nachteilig sind die hohen Investitionskosten, der hohe Grad an Abwärme, die großen Anfahrzeiten und die Intoleranz gegenüber Schwefel.

Direktmethanol-Brennstoffzellen (DMFC) arbeiten im Temperaturbereich von 60 bis 200°C, weisen Leistungsdichten im Bereich von ca. 0,6 kW/m³ auf und nutzen kathodenseitig Sauerstoff und anodenseitig Methanol als chemische Energieträger. Der Elektrolyt besteht aus einer festen Polymermembran. Als Vorteil kann der Betrieb der Zelle ohne Brennstoff-Reformer angesehen werden, womit eine Kostenreduktion verbunden ist. Nachteilig beim Betrieb wirken sich die geringe Effizienz und Leistungsdichte aus.

Viele der genannten Ausführungsvarianten basieren auf der Bereitstellung von Brennstoffen, insbesondere von Wasserstoff, dessen Gewinnung über verschiedene Prozesse erfolgen kann: thermische Verfahren, solarthermische Verfahren oder Elektrolyse.

Neuerdings lassen sich, wie in WO 2012/110352 A1 oder WO 2012/110354 A1 beschrieben, auch Pyroelektrika zur Wasserstofferzeugung einsetzen.

Pyroelektrische Materialien reagieren in einem bestimmten Temperaturbereich bis hin zu einer Grenztemperatur, der Curie-Temperatur T_{c}, auf Temperaturänderungen mit der Bereitstellung elektrischer Ladungen auf der Oberfläche und der Ausbildung starker elektrischer Felder bei Spannungen bis in den Megavolt-Bereich Damit sind sie für Anwendungen prädestiniert, die eine Umwandlung thermischer Energie in andere Energieformen, wie elektrische oder chemische, fordern.

Einerseits kann eine Spaltung des Wassers direkt auf der pyrokatalytisch aktiven Oberfläche erfolgen, wie in WO 2012/110352 A1 beschrieben. Nachteil dieser Lösung ist jedoch, dass die Gastrennung effektiv nur für einen Heiz- oder einen Kühlzyklus erfolgen kann. Wenn organische Pyroelektrika verwendet werden, kann sich ihr Polarisationsvektor infolge des Temperaturwechsels umpolen bzw. können unterschiedlich gerichtete Polarisierungen gleichzeitig vorliegen, sodass dann keine eindeutige Trennung der Gase mehr erfolgt. Andererseits können die auf der Oberfläche pyroelektrischer Materialien entstehenden Ladungen zum Betrieb einer Elektrolysezelle genutzt werden, wie es in WO 2012/110354 A1 dargelegt ist. Nachteil dieser Lösung ist jedoch, dass durch die Übertragung der Ladungen (des generierten elektrischen Stroms) ohmsche Verluste sowie Verluste durch Übergangswiderstände auftreten.

Die Energiewandlung, also die Wandlung der thermischen Energie in elektrische Energie, kann auch direkt durch das pyroelektrische Material erfolgen. Ein Beispiel ist in der Druckschrift US 4620262 A dargelegt.

Pyroelektrische Materialien werden bereits im Bereich der Sensorik als thermische Detektoren kommerziell eingesetzt, beispielsweise als Bewegungsmelder, wie in WO 2009/083181 A1 beschrieben. Hierbei lassen sie sich für das Abzählen von Menschen bei Ein- und Austritt aus Gebäuden verwenden. Weitere Anwendungen betreffen nicht-dispersive Infrarotsensoren zur Detektion von Gas oder Feuer. Eingesetzt werden diese z. B. im medizinischen Bereich, in der Industrie, bei Öl- und Gasförderung sowie in der Luft- und Raumfahrt.

Weitere Anwendungen nutzen neuerdings auch die pyrokatalytische Wirksamkeit der Materialien, wie in der Druckschrift E. Gutmann et al.: Pyroelectrocatalytic Disinfection Using the Pyroelectric Effect of Nano- and Microcrystalline LiNbO3 and LiTaO3 Particles, The Journal of Physical Chemistry C 116 (9), 5383 (2012) beschrieben ist, welche die Beeinflussung und Regelung von Biotransformationsprozessen (DE 10 2008 032 829 A1), eine Vorrichtung und ein Verfahren zur Desinfektion einer Klimaanlage (DE 10 2011 085 790 A1), ein Verfahren für enzymkatalysierten Synthese zur Optimierung biotechnologischer und biosensorischer Prozesse und zur Regeneration von Kofaktoren (DE 10 2008 030 036 B4) sowie eine 0-berflächenbeschichtung mit eisabweisenden Eigenschaften (DE 10 2012 208 653 A1) betrifft.

Auch die Nutzung der Pyroelektrika für Anwendungen im Bereich der Röntgenstrahlerzeugung werden beschrieben (WO 2009/127187 A3).

Pyroelektrische Materialien lassen sich also zur Energiewandlung und Stoffwandlung auf Basis ungenutzter thermischer Energie einsetzen. So kann Wasser zu Wasserstoff und Sauerstoff gespalten werden. Diese und andere chemische Energieträger lassen sich als Eingangsstoffe für die Brennstoffzelle einsetzen.

In der Druckschrift Zhao et al.: A high energy density all solid-state tungsten-air battery, Chemical Communications 49, 5357 (2013) wird das Konzept zur Kombination einer regenerativen Festoxidbrennstoffzelle (RSOFC) mit einer redoxaktiven, zyklierbaren Energiespeichereinheit (RCU) beschrieben. Das in der Brennstoffzelle anodenseitig entstehende Wasser dient zur Oxidation einer Metalloberfläche (hier Wolfram zu Wolframoxid - RCU). Ein weiteres Reaktionsprodukt ist der Wasserstoff, welcher der Brennstoffzelle zur Stromerzeugung wieder zugeführt wird. Der Prozess läuft so lange ab, bis die Metalloberfläche vollständig reagiert hat. Danach wird durch eine externe Stromquelle die Reaktion durch Elektrolyse umgekehrt, wodurch das Wolframoxid wieder zu Wolfram reduziert wird. Die Regeneration der in der Brennstoffzelle verbrauchten chemischen Energieträger kann damit als eine Weiterentwicklung der Brennstoffzelle hinsichtlich Zyklierbarkeit und Ressourceneffizienz angesehen werden.

Die Druckschrift Xu et al.: A novel solid oxide redox flow battery for grid energy storage, Energy & Environmental Science 4, 4942 (2011) enthält ein Konzept zur Kombination einer regenerativen elektrochemischen Festoxidzelle (RSOEC) mit einer redoxaktiven, zyklierbaren Energiespeichereinheit. Bei Kontakt des Metalls (hier Eisen) der RCU mit Wasser kommt es zur Bildung von Wasserstoff, welcher dann der Brennstoffzelle (SOEC) zugeführt wird und in Verbindung mit Sauerstoff zur Erzeugung von Strom zur Verfügung steht. Nach der vollständigen Oxidation des Metalls zu Metalloxid kommt die Reaktion zum Erliegen und die elektrochemische Zelle muss durch Elektrolyse wieder geladen (regeneriert) werden.

Die Nachteile der genannten Verfahren sind, dass entweder Abwärme nicht genutzt oder diese nicht gespeichert werden kann oder eine Stoffwandlung bzw. Energierückgewinnung nur mit geringer Effizienz erfolgt oder eine Regeneration unter Nutzung hochwertiger elektrischer Energie durchgeführt wird. Brennstoffzellen als Tertiärelemente arbeiten unter externer Zufuhr von chemischen Energieträgern kontinuierlich und verbrauchen diese somit permanent. Es werden die chemischen Energieträger in einer exothermen Reaktion verbraucht und gehen somit verloren. Hinsichtlich einer Rückgewinnung der Brennstoffe bzw. der Realisierung eines Kreisprozesses bei gleichzeitiger Nutzung von (Niedertemperatur-) Abwärme wird das Potential nicht vollständig ausgeschöpft. Weiterhin wird die bei der Verbrennung frei werdende Wärmemenge nur teilweise innerhalb des Prozesses genutzt.

Der Erfindung liegt die Aufgabe zugrunde, eine Vorrichtung und ein Verfahren zur Umwandlung von thermischer Energie in chemische Energie und von chemischer Energie in elektrische Energie mit chemischer Zwischenspeicherung anzugeben, die derart geeignet ausgebildet sind, dass eine effiziente Energiewandlung und Stoffwandlung sowie die Nutzung von Abwärme möglich werden.

Die Aufgabe wird durch die Merkmale der Patentansprüche 1 und 36 gelöst. Die Vorrichtung zum Umwandeln von thermischer Energie in chemische Energie und von chemischer Energie in elektrische Energie mit chemischer Zwischenspeicherung,
besteht gemäß Patentanspruch 1 zumindest aus
- einer Brennstoffzelleneinheit,
   zu der zumindest gehören
   - eine Anode aus einem ersten gaspermeablen Stromkollektor und einem anodenseitigen Katalysator,
   - eine Kathode aus einem zweiten gaspermeablen Stromkollektor und einem kathodenseitigen Katalysator
   - ein zwischen Anode und Kathode befindlicher Elektrolyt,
   wobei sich zumindest die Anode, die Kathode und der Elektrolyt in einer Kammer befinden, und
   - ein Sauerstoff-Zugang zur Kammer für eine Zufuhr von Sauerstoff oder Sauerstoffgemisch wie Luft an den kathodenseitigen Katalystor,
- einem Fluidreservoir,
   zu dem zumindest gehören
   - ein pyrokatalytisch wirksames Material mit mindestens einer polaren Achse,
   - ein erster thermischer Energieträger mit hoher Temperatur T_{H},
   - ein zweiter thermischer Energieträger mit niedriger Temperatur T_{K,}
   und
- einem Gasdiffusionskanal,
wobei die Kammer der Brennstoffzelleneinheit mit dem Fluidreservoir über den Gasdiffusionskanal in Verbindung steht,
wobei das Fluidreservoir zumindest das pyrokatalytisch wirksame Material enthält, das zeitlichen Temperaturänderungen ΔT/Δt ausgesetzt ist, wobei die Temperaturänderung ΔT/Δt durch einen alternierenden Wärmeübertrag über einen ersten thermischen Energieträger mit hoher Temperatur T_{H} und einen zweiten thermischen Energieträger mit niedriger Temperatur T_{K} am pyrokatalytisch wirksamen Material zur Umwandlung von thermischer Energie in chemische Energie realisiert wird, wobei bei hoher Temperatur T_{H} eine einstellbare Maximaltemperatur T_{Hmax} des pyrokatalytisch wirksamen Materials unterhalb dessen Curie-Temperatur T_{C} liegt,
wobei am pyrokatalytisch wirksamen Material eine Reduktion bzw. Oxidation eines Fluids (z. B. Wasser oder Wasserdampf) im Fluidreservoir zu zumindest Wasserstoff als chemischer Energieträger stattfindet, wobei zumindest der Wasserstoff im Gasdiffusionskanal vom Fluidreservoir aus zum anodenseitigen Katalysator strömt, an dem zur Umwandlung der chemischen Energie in elektrische Energie eine Oxidation des Wasserstoffs stattfindet, und
wobei zumindest im Gasdiffusionskanal, als Teil einer Anordnung zur Zwischenspeicherung, eine chemische Zwischenspeicherung möglich ist.

Der erste thermische Energieträger und der zweite thermische Energieträger können identisch sein, wobei der zweite thermische Energieträger dann thermisch fluktuiert.

Als pyrokatalytisch wirksames Material mit mindestens einer polaren Achse können Materialien mit ionischen (z. B. Triglycinsulfat) oder kovalenten Bindungen, Übergangsmetalloxide (z. B. LiTaO₃, LiNbO₃, BaTiO₃, PZT, PMNPT), Silikate (Turmalingruppe) oder Polymere (z. B. Polyvinylidenfluorid) eingesetzt werden. Im Folgenden wird das eingesetzte pyrokatalytisch wirksame Material auch kurz als Pyroelektrikum beschrieben.

An den beiden gaspermablen Stromkollektoren von Anode und Kathode kann jeweils zumindest eine Verbindungsleitung angeschlossen sein, die zu einem elektrischen Energieverbraucher führt.

Es kann eine Schalt-/Steuereinheit vorhanden sein, die in einer der beiden Verbindungsleitungen zur Abschaltung oder Zuschaltung des elektrischen Energieverbrauchers eingebracht ist, wobei der elektrische Energieverbraucher weitere elektrische Bauteile (Diode, Kondensator, Widerstand, Transformator) zur Formung eines elektrischen Stromes beinhalten kann.

Der erste thermische Energieträger mit hoher Temperatur TH und der zweite thermische Energieträger mit niedriger Temperatur T_{K} können über ein Wegeventil mit Steuer-/Schalteinheit mit einer Durchflusseinheit verbunden sein.

Mit dem Wegeventil kann mittels der Steuer-/Schalteinheit der Zufluss des ersten thermischen Energieträgers mit hoher Temperatur T_{H} und des zweiten thermischen Energieträgers mit niedriger Temperatur T_{K} gesteuert bzw. geregelt werden, wobei die Steuer-/Schalteinheit auch mit einer Temperatursteuer-/Temperaturkontrolleinheit verbunden sein kann.

Das Pyroelektrikum kann zumindest im Kontakt mit der Durchflusseinheit stehen, wobei die zeitlichen Temperaturänderungen ΔT/Δt in der Durchflusseinheit zeitliche Temperaturänderungen ΔT/Δt im Pyroelektrikum verursachen.

An das Fluidreservoir kann ein Druckausgleichsbehälter angebracht sein, der mit einem Absperrventil mit Entlüftung verbunden ist.

Im Fluidreservoir kann ein Fluid (Flüssigkeit oder Gas, z. B. Wasser oder Wasserdampf) vorhanden sein, das zumindest eine fluide Komponente mit kovalent oder ionisch gebundenem Wasserstoff enthält.

Das Fluid kann durch das Absperrventil geleitet werden, wobei das Fluid den Druckausgleichbehälter passiert und in das Fluidreservoir übergeht.

Das Absperrventil kann den Zufluss des Fluids steuern oder regeln, wobei das Absperrventil wahlweise mit einer Steuer-/Kontrolleinheit verbunden ist.

Das Absperrventil kann den Druck im Druckausgleichsbehälter durch Entlüftung steuern bzw. regeln, wobei das Absperrventil wahlweise mit einer Steuer-/Kontrolleinheit verbunden ist

Ein Sauerstoff-Zugang kann Sauerstoff oder ein Sauerstoffgemisch wie Luft in die Brennstoffzelleneinheit bringen, wobei der Sauerstoff am kathodenseitigen Katalysator reduziert wird.

Der Sauerstoff-Zugang kann aus einer gasförmigen Umgebung oder aus anderen Quellen, z. B. Gasverflüssigung oder aus kommerziellem Erwerb, kommen, wobei der Sauerstoff-Zugang wahlweise über die Steuer-/Kontrolleinheit gesteuert bzw. geregelt wird.

Am Gasdiffusionskanal kann optional ein Absperrventil angebracht sein, wobei das Absperrventil den Druck zwischen Fluidreservoir und Brennstoffzelleneinheit oder im Gasdiffusionskanal steuert oder regelt, wobei das Absperrventil wahlweise mit einer Steuer-/Kontrolleinheit verbunden ist.

Am Gasdiffusionskanal kann des Weiteren optional ein Absperrventil angebracht sein, wobei über das Absperrventil der Wasserstoff aus dem Gasdiffusionskanal entnehmbar ist, wobei das Absperrventil wahlweise mit einer Steuer-/Kontrolleinheit verbunden ist.

Zwischen Gasdiffusionskanal und Fluidreservoir kann optional eine Gastrennungseinheit angebracht sein.

Die Gastrennungseinheit kann Gasanteile des Fluids auftrennen, wobei Wasserstoff in den Gasdiffusionskanal übertritt und andere fluide Stoffe im Fluidreservoir zurückgehalten werden.

An der Gastrennungseinheit kann optional ein Absperrventil zur Abführung des im Fluidreservoir optional entstehenden Sauerstoffs angebracht sein.

Der in der Gastrennungseinheit aufgetrennte Sauerstoff kann über das Absperrventil in einer Rück-/Abführleitung zur Sauerstoffzufuhrleitung oder in die Umgebung oder in optionale Behälter geleitet werden, wobei die Rück-/Abführleitung am Absperrventil angebracht sein kann.

Im Fluidreservoir können der thermische Energieträger mit hoher Temperatur T_{H} in Form eines ersten Behälters und der thermische Energieträger mit niedriger Temperatur T_{K} in Form eines zweiten Behälters räumlich voneinander getrennt sein.

Mittels eines äußeren Wärmestroms kann der im ersten Behälter befindliche thermische Energieträger mit hoher Temperatur T_{H} erwärmt werden, wobei bei hoher Temperatur T_{H} die einstellbare Maximaltemperatur T_{Hmax} des eingesetzten pyrokatalytisch wirksamen Materials, kurz: Pyroelektrikum, unterhalb dessen Curie-Temperatur T_{C} liegt.

Die Trennung des thermischen Energieträgers mit hoher Temperatur T_{H} vom thermischen Energieträgers mit niedriger Temperatur T_{K} kann behälterbedingt durch einen thermischen Isolator erfolgen, wobei der thermische Isolator eine geringe Wärmekapazität besitzt und eine Wärmeleitung zwischen dem thermischen Energieträger mit hoher Temperatur T_{H} und dem thermischen Energieträger mit niedriger Temperatur T_{K} unterdrückt.

Im thermischen Isolator kann optional zumindest eine Dichtung eingebracht sein, wobei die Dichtung einen Temperaturausgleich zwischen dem thermischen Energieträger mit hoher Temperatur T_{H} und dem thermischen Energieträger mit niedriger Temperatur T_{K} unterdrückt und wobei die Dichtung einen regel-/steuerbaren Materialdurchgang ermöglicht.

Das Pyrolelektrikum kann als Schicht auf einem verformbaren Trägermaterial aufgebracht sein.

Der mit dem Pyroelektrikum beschichtete Pyroelektrikum-Träger kann durch Bandführungselemente durch den thermischen Energieträger mit hoher Temperatur T_{H} und den thermischen Energieträger mit niedriger Temperatur T_{K} geführt werden, wobei die gerichtete Bewegung zeitliche Temperaturänderungen ΔT/Δt im Pyroelektrikum verursacht.

Der mit dem Pyroelektrikum beschichtete Pyroelektrikum-Träger kann ausschließlich durch Dichtungen hindurch im thermischen Isolator geführt sein, wobei der mit dem Pyroelektrikum beschichtete Pyroelektrikum-Träger auch ausschließlich entlang des thermischen Isolators geführt sein kann, wobei der mit dem Pyroelektrikum beschichtete Pyroelektrikum-Träger entweder durch Dichtungen hindurch im thermischen Isolator oder entlang des thermischen Isolators geführt sein kann.

Das Pyroelektrikum kann auf einem rotationssymmetrischen Körper aufgebracht sein.

Der mit dem Pyroelektrikum beschichtete rotationssymmetrische Körper kann mit einer externen Bewegungseinheit in Verbindung stehen und in Rotation versetzt werden.

Zwischen dem mit dem Pyroelektrikum beschichteten rotationssymmetrischen Körper und der räumlichen Begrenzung des Fluidreservoirs können Dichtungen angebracht sein.

Die Dichtungen und der mit dem Pyroelektrikum beschichtete rotationssymmetrische Körper können eine räumliche Trennung des thermischen Energieträgers mit hoher Temperatur T_{H} und des thermischen Energieträgers mit niedriger Temperatur T_{K} realisieren, wobei die Dichtungen einen Temperaturausgleich zwischen dem thermischen Energieträger mit hoher Temperatur T_{H} und dem thermischen Energieträger mit niedriger Temperatur T_{K} unterdrücken.

Wahlweise kann die Energie zur Aufrechterhaltung der Bewegung des rotationssymmetrischen Körpers oder die Energie zur Aufrechterhaltung der Bandführungselemente oder die Energie zur Versorgung des Wegeventils mit Schalt-/Steuereinheit aus dem elektrischen Energieverbraucher entnehmbar sein.

Das Pyroelektrikum kann auch stationär bzw. fixiert im Fluidreservoir angeordnet sein, wobei die Temperaturänderung für die pyrokatalytische Wirksamkeit durch Fluktuationen der Brennstoffzelleneinheit selbst bereitgestellt wird.

In einer speziellen Ausführung kann die Vorrichtung zum Umwandeln von thermischer Energie in chemische Energie und von chemischer Energie in elektrische Energie mit chemischer Zwischenspeicherung zumindest bestehen aus
- einer zylinderartig mehrschichtig aufgebauten Brennstoffzelleneinheit, zu der zumindest gehören
   - eine hohlzylinderförmige Anode aus einem ersten gaspermeablen Stromkollektor und einem anodenseitigen Katalysator,
   - eine hohlzylinderförmige Kathode aus einem zweiten gaspermeablen Stromkollektor und einem kathodenseitigen Katalysator, wobei die Anode von der Kathode umgeben ist,
   - ein zwischen der hohlzylinderförmigen Anode und der hohlzylinderförmigen Kathode befindlicher hohlzylinderförmig angeordneter Elektrolyt,
   wobei sich zumindest die Anode, die Kathode und der Elektrolyt in einer hohlzylindrischen Kammer befinden und
   - ein Sauerstoff-Zugang zur hohlzylindrischen Kammer für eine Zufuhr von Sauerstoff oder Sauerstoffgemisch an den anodenseitigen Katalysator,
- einem hohlzylinderartigen Fluidreservoir,
   zu dem zumindest gehören
   - ein axial mittig angeordnetes pyrokatalytisch wirksames Material mit mindestens einer polaren Achse, das von dem hohlzylindrischen Fluidreservoir umgeben ist,
   - ein erster thermischer Energieträger mit hoher Temperatur T_{H},
   - ein zweiter thermischer Energieträger mit niedriger Temperatur T_{K},
   und
- einem Gasdiffusionskanal, der als Freiraum das Fluidreservoir umgibt,
wobei die hohlzylinderförmige Kammer der Brennstoffizelleneinheit mit dem Fluidreservoir über dem Gasdiffusionskanal in Verbindung steht,
wobei das Fluidreservoir zumindest das axial mittig angeordnete, stabförmige pyrokatalytisch wirksame Material enthält, das zeitlichen Temperaturänderungen ΔT/Δt des durch das Fluidreservoir strömenden Fluids abwechselnd ausgesetzt ist, wobei die Temperaturänderung ΔT/Δt durch den alternierenden Wärmeübertrag über einen ersten thermischen Energieträger mit hoher Temperatur T_{H} und einen zweiten thermischen Energieträger mit niedriger Temperatur T_{K} am pyrokatalytisch wirksamen Material zur Umwandlung von thermischer Energie in chemische Energie realisiert wird, wobei bei hoher Temperatur T_{H} eine einstellbare Maximaltemperatur T_{Hmax} des pyrokatalytisch wirksamen Materials (13) unterhalb dessen Curie-Temperatur T_{C} liegt,
wobei am pyrokatalytisch wirksamen Material eine Reduktion bzw. Oxidation des Fluids im Fluidreservoir zu zumindest Wasserstoff als chemischem Energieträger stattfindet, wobei zumindest der Wasserstoff über eine wasserstoffdurchlässige und wasserabweisende hohlzylindrische Membran in den Gasdiffusionskanal vom Fluidreservoir aus zum kathodenseitigen Katalysator strömt, wobei zur Umwandlung der chemischen Energie in elektrische Energie eine Oxidation des Wasserstoffs am anodenseitigen Katalysator der Brennstoffzelleneinheit stattfindet, und
wobei zumindest im Gasdiffusionskanal eine chemische Zwischenspeicherung möglich ist.

Das Verfahren zur Umwandlung von thermischer Energie in chemische Energie und von chemischer Energie in elektrische Energie mit chemischer Zwischenspeicherung mittels einer vorgenannten Vorrichtung,
wird gemäß dem Patentanspruch 34 mit folgenden Schritten durchgeführt:
- Zuführung von fluktuierender thermischer Energie an ein pyrokatalytisch wirksames Material mit mindestens einer polaren Achse mittels eines ersten thermischen Energieträgers mit hoher Temperatur T_{H} und mittels eines zweiten thermischen Energieträgers mit niedriger Temperatur T_{K}, wobei bei hoher Temperatur T_{H} eine einstellbare Maximaltemperatur T_{Hmax} unterhalb der Curie-Temperatur T_{C} des pyrokatalytisch wirksamen Materials liegt, zur Umwandlung von thermischer Energie in chemische Energie,
- Herstellung von die chemische Energie tragendem Wasserstoff durch Reaktion fluider Stoffe an dem pyrokatalytisch wirksamen Material zu einer möglichen chemischen Zwischenspeicherung in einem Gasdiffusionskanal und
- Reaktion des hergestellten, in dem Gasdiffusionskanal befindlichen und zu einer Brennstoffzelleneinheit geführten Wasserstoffs in der Brennstoffzelleneinheit zur Generierung von elektrischem Strom.

Der am pyrokatalytisch wirksamen Material generierte Wasserstoff kann im Gasdiffusionskanal aufgefangen und zu einer chemischen Zwischenspeicherung aufkonzentriert werden, wobei der Wasserstoff optional mittels einer Gasentnahmeeinheit entnehmbar ist.

In dem erfindungsgemäßen Verfahren und der zugehörigen Vorrichtung werden pyrokatalytisch wirksame Materialien mit hoher spezifischer Oberfläche eingesetzt, um eine hohe pyrokatalytische Wirksamkeit zu erzielen, sodass eine effiziente Energiewandlung und Stoffwandlung möglich werden. Das pyroelektrisch wirksame Material wird mit Hilfe von Wärmeströmen auf unterschiedlichen Temperaturniveaus einer zeitlichen Temperaturänderung ΔT/Δt unterzogen. Durch die resultierende pyrokatalytische Wirksamkeit soll ein Fluid zu zumindest Wasserstoff gespalten werden.
Die hier beschriebene Erfindung ermöglicht die Nutzung von Niedertemperaturabwärme zur Stoffwandlung und Energiewandlung von thermischer Energie in chemische Energie sowie deren Speicherung und Nutzung zur Erzeugung von elektrischer Energie auf Basis pyrokatalytisch wirksamer Materialien und der Brennstoffzellentechnologie.

Die Stoffwandlung soll durch die pyrokatalytische Wirksamkeit der Materialien erfolgen, um Wasserstoff aus einem Fluid, z. B. Wasser oder Wasserdampf, zu erzeugen, welcher in Brennstoffzellen elektrisch verstromt werden kann.

Die Energiewandlung kann durch die zweistufige Umwandlung von thermischer Energie in chemische, durch die pyrokatalytische Wirksamkeit erzeugte Energie und die anschließende Umwandlung der in Form eines oder mehrerer reaktiver Gase gespeicherten chemischen Energie in elektrische Energie erfolgen (durch Nutzung der oben beschriebenen erzeugten Energieträger in einer Brennstoffzelle). Allerdings muss die Abfolge der Umwandlung von thermischer Energie in elektrische Energie über chemische Energie nicht unbedingt kontinuierlich sein, sondern kann mit der Zwischenspeicherung der chemischen Energie in Form von Wasserstoff diskontinuierlich erfolgen.

Im Folgenden werden die Eigenschaften des erfindungsgemäß eingesetzten Materials beschrieben:
Die Struktur des verwendeten pyrokatalytisch wirksamen Materials weist mindestens eine polare Achse auf, ferner auch bis zu drei, welche zu einer permanenten elektrischen Polarisation führt. Das Material weist eine sehr geringe elektronische Leitfähigkeit auf und besitzt demnach eine große elektronische Bandlücke (E_{g} > 2,0 eV). Eine geringe Wärmekapazität und eine hohe Wärmeleitfähigkeit sind weitere notwendige Charakteristika für eine gute thermische Zyklierbarkeit des pyrokatalytisch wirksamen Materials. Das pyrokatalytisch wirksame Material kann dabei einkristallin, teilkristallin oder auch polykristallin in Form eines Pulvers vorliegen bzw. auf ein Trägermaterial in einer Matrix aufgebracht werden. Eine Beschichtung eines Trägermaterials ist ebenfalls möglich.

Gemäß den oben genannten Anforderungen ergeben sich somit folgende Materialklassen: Materialien mit ionischen (z. B. Triglycinsulfat) oder kovalenten Bindungen, Übergangsmetalloxide (z. B. LiTaO₃, LiNbO₃, BaTiO₃, PZT, PMNPT), Silikate (Turmalingruppe) oder Polymere (z. B. Polyvinylidenfluorid).

Das Wesentliche der Erfindung besteht in der Regeneration der chemischen Energieträger einer Brennstoffzelle, indem die Oberfläche des pyrokatalytisch wirksamen Materials verwendet wird, um Wasserelektrolyse zu betreiben. Dazu muss die pyrokatalytische Oberfläche des pyrokatalytisch wirksamen Materials maximiert werden. Um dies zu realisieren, können einerseits pyroelektrische Folien (diese können auch aufgeraut sein), andererseits Kristallbruch sowie pyroelektrische Schichten (u. a. hergestellt durch Atomlagenabscheidung, Sol-Gel-Synthese, physikalische Gasphasenabscheidung oder Langmuir-Blodgett-Technik) oder von vorn herein als Mikro- oder Nanopartikel synthetisierte pyroelektrische Partikel z. B. auf einem Trägermaterial mit großer Oberfläche aufgebracht werden. Es können ebenso poröse Materialen (z. B. Keramiken oder Schäume) eingesetzt werden, die mit einem pyroelektrischen Material beschichtet sind oder selbst aus einem pyrokatalytisch wirksamen Material bestehen.

Die Trägermaterialien dienen sowohl zur Verringerung der nötigen Menge an Aktivmaterial als auch zur Erhöhung der Wärmeübertragungsfläche. Dies kann durch den Einsatz von Lamellen beliebiger Orientierung, porösen Stoffen (lose oder zusammenhängend) oder gewickelten Folien (als Trägerstruktur oder als Aktivmaterial) realisiert werden. Die erwähnten Trägermaterialvarianten sowie die Haftvermittler weisen eine hohe Wärmeleitfähigkeit und eine geringe Wärmekapazität auf. Die Trägerstrukturen mit den pyrokatalytisch wirksamen Materialien können ausgewechselt werden. Somit ist ein einfacher Austausch im Fall einer Degradation des Aktivmaterials möglich.

Durch den Einsatz von heterogenen Phasengemischen und polykristallinen Stoffen mit unterschiedlichen Curie-Temperaturen T_{C} ist es zusätzlich möglich, Umsatzsteigerungen zu erzielen. Die pyrokatalytisch wirksamen Materialien können so angebracht sein, dass ihre Curie-Temperatur Tc gestaffelt ist, sodass die Arbeitspunkte auf den Temperaturgradienten des Wassers in der Reaktionszone eingestellt sind. Die Arbeitsweise erfolgt derart, dass unterhalb der Curie-Temperatur T_{C} gearbeitet wird, diese also nicht überschritten wird, um so den größtmöglichen pyroelektrischen Koeffizienten, der die pyrokatalytische Wirksamkeit repräsentiert, zu nutzen.

Ein Vorteil gegenüber dem Stand der Technik bildet die Möglichkeit, eine Brennstoffzelleneinheit autark, also ohne Anbindung an eine Wasserstoffinfrastruktur, und effizient, das heißt z. B. ohne zusätzliche Übergangswiderstände und kostensparend, wobei leicht verfügbare Materialien genutzt werden können, zu betreiben. Mit einer möglichen Nutzung von Wasserdampf wird der Energiebedarf zur Wasserspaltung reduziert.

Ein Ladeprozess mittels thermischer Energie anstatt elektrischer Energie, wie bei den meisten elektrochemischen Energiespeichem, die als Sekundärelemente arbeiten, kann als weiterer Vorteil für die hier vorgestellte Erfindung angeführt werden.

Außerdem sorgt die Rückgewinnung des Energieträgers für Nachhaltigkeit und eine Steigerung des Wirkungsgrads. Durch die Regeneration des chemischen Energieträgers durch nicht toxische, leicht verfügbare Pyroelektrika, steht die hier vorgestellte Erfindung für Umweltfreundlichkeit und Ressourceneffizienz.

Der erfindungsgemäße Aufbau der Vorrichtung zur Umwandlung von thermischer und chemischer Energie sowie der Vorrichtung zur Bereitstellung von elektrischer Energie ist in ihrer Form beliebig auslegbar und skalierbar.

Weiterbildungen und weitere Ausgestaltungen der Erfindung sind in weiteren Unteransprüchen angegeben.

Die Erfindung wird mittels mehrerer Ausführungsbeispiele anhand mehrerer Zeichnungen erläutert:

Es zeigen:

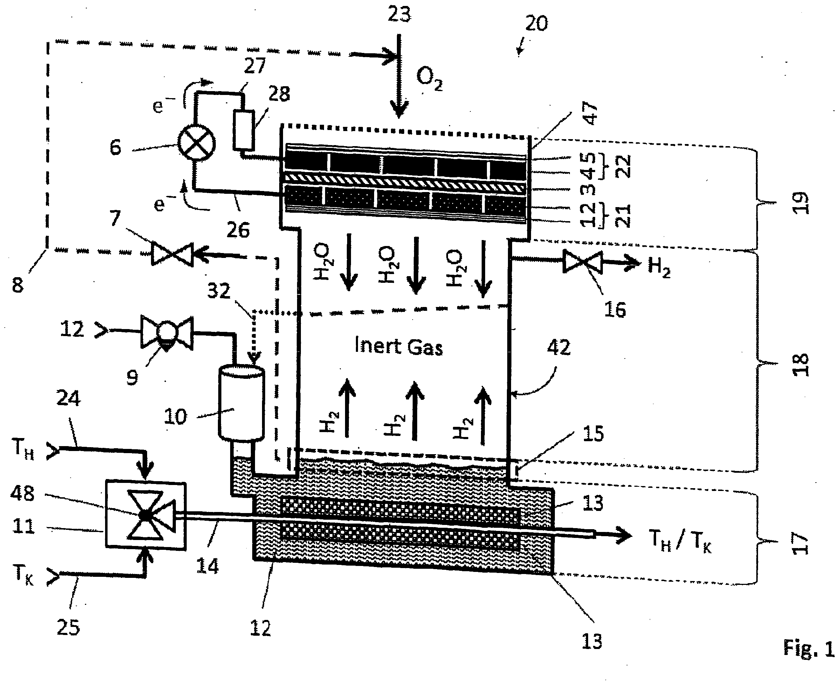

- Fig. 1: eine schematische schnittartige Darstellung einer erfindungsgemäßen ersten Anordnung und einer ersten Vorrichtung zur Umwandlung von thermischer Energie in chemische Energie und chemischer Zwischenspeicherung mithilfe eines pyrokatalytisch wirksamen Materials zur elektrischen Stromerzeugung, die kontinuierlich oder diskontinuierlich betrieben werden kann, wobei mittels alternierender Erwärmung und Abkühlung durch die thermischen Energieträger hoher Temperatur und niedriger Temperatur das pyrokatalytisch wirksame Material einer zeitlichen Temperaturänderung ΔT/Δt unterzogen und dadurch Wasserstoff gebildet wird, der in einer Brennstoffzelleneinheit in elektrische Energie umgewandelt wird,

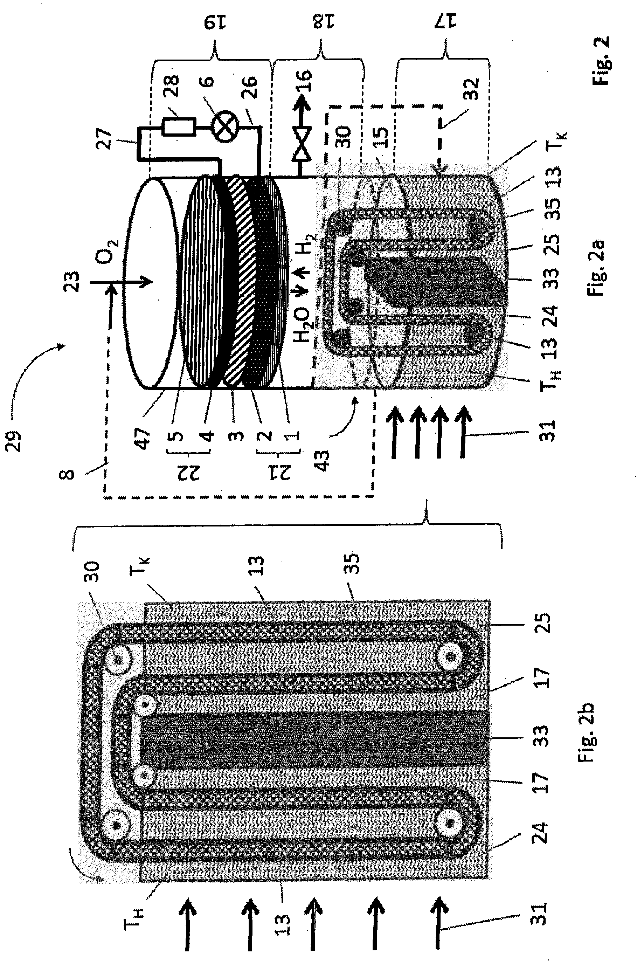

- Fig. 2: eine schematische Darstellung einer erfindungsgemäßen zweiten Anordnung und einer zweiten Vorrichtung zur Umwandlung von thermischer Energie in chemische Energie und chemischer Zwischenspeicherung mithilfe eines pyrokatalytisch wirksamen Materials zur elektrischen Stromerzeugung, die kontinuierlich oder diskontinuierlich betrieben werden kann, wobei mittels einer gerichteten Bewegung eines Pyroelektrikum-Bandes durch die thermischen Energieträger hoher Temperatur und niedriger Temperatur das pyrokatalytisch wirksame Material einer zeitlichen Temperaturänderung ΔT/Δt unterzogen und dadurch Wasserstoff gebildet wird, der in einer Brennstoffzelleneinheit in elektrische Energie umgewandelt wird, wobei
Fig. 2a eine perspektivische Darstellung der zweiten Vorrichtung und Fig. 2b eine vergrößerte Schnittdarstellung der Bandführung der zweiten Vorrichtung zeigen,

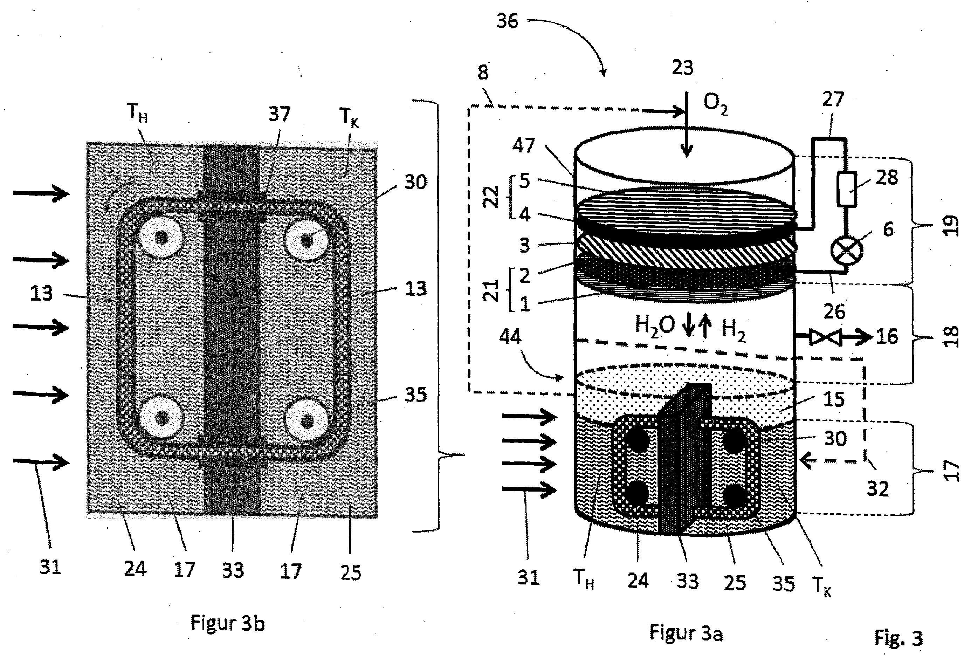

- Fig. 3: eine schematische Darstellung einer erfindungsgemäßen dritten Anordnung und einer dritten Vorrichtung zur Umwandlung von thermischer Energie in chemische Energie und chemischer Zwischenspeicherung mithilfe eines pyrokatalytisch wirksamen Materials zur elektrischen Stromerzeugung, die kontinuierlich oder diskontinuierlich betrieben werden kann, wobei mittels einer gerichteten Bewegung eines Pyroelektrikum-Bandes durch die thermischen Energieträger hoher Temperatur und niedriger Temperatur das pyrokatalytisch wirksame Material einer zeitlichen Temperaturänderung ΔT/Δt unterzogen und dadurch Wasserstoff gebildet wird, der in einer Brennstoffzelleneinheit in elektrische Energie umgewandelt wird, wobei
Fig. 3a eine perspektivische Darstellung der dritten Vorrichtung und Fig. 3b eine vergrößerte Schnittdarstellung der Bandführung der dritten Vorrichtung zeigen,

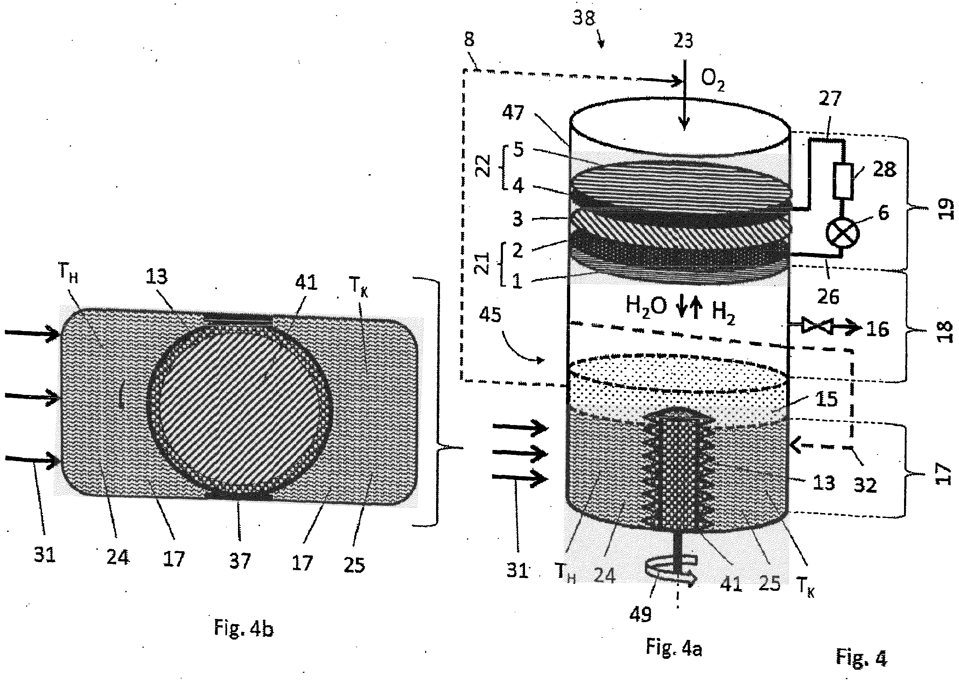

- Fig. 4: eine schematische Darstellung einer erfindungsgemäßen vierten Anordnung und einer vierten Vorrichtung zur Umwandlung von thermischer Energie in chemische Energie und chemischer Zwischenspeicherung mithilfe eines pyrokatalytisch wirksamen Materials zur elektrischen Stromerzeugung, die kontinuierlich oder diskontinuierlich betrieben werden kann, wobei mittels einer Drehung des rotationssymmetrischen Trägerkörpers mit pyrokatalytisch wirksamer Oberfläche durch die thermischen Energieträger hoher Temperatur und niedriger Temperatur hindurch das pyrokatalytisch wirksame Material einer zeitlichen Temperaturänderung ΔT/Δt unterzogen und dadurch Wasserstoff gebildet wird, der in einer Brennstoffzelleneinheit in elektrische Energie umgewandelt wird, wobei
Fig. 4a eine perspektivische Darstellung der vierten Vorrichtung und Fig. 4b eine Schnittdarstellung des Fluidreservoirs mit rotationssymmetrischem Körper der vierten Vorrichtung zeigen,
und

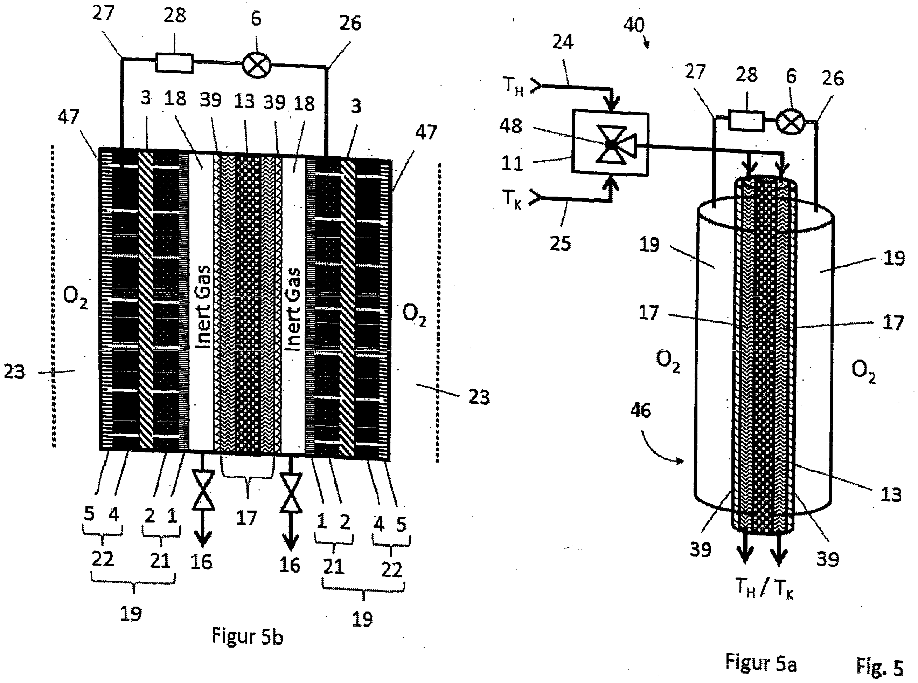

- Fig. 5: eine schematische Darstellung einer erfindungsgemäßen fünften Anordnung und einer fünften Vorrichtung zur Umwandlung von thermischer Energie in chemische Energie und chemischer Zwischenspeicherung mithilfe eines pyrokatalytisch wirksamen Materials zur elektrischen Stromerzeugung, die kontinuierlich oder diskontinuierlich betrieben werden kann, wobei mittels alternierender Erwärmung und Abkühlung durch die thermischen Energieträger hoher Temperatur und niedriger Temperatur das pyrokatalytisch wirksame Material einer zeitlichen Temperaturänderung ΔT/Δt unterzogen und dadurch Wasserstoff gebildet wird, der in einer Brennstoffzelleneinheit in elektrische Energie umgewandelt wird, wobei Fig. 5a eine perspektivische Darstellung der fünften Vorrichtung und Fig. 5b eine vergrößerte Schnittdarstellung der fünften Anordnung bzw. fünften Vorrichtung
zeigen.

### Ausführungsbeispiel 1

In Fig. 1 eine schematische Darstellung der erfindungsgemäßen ersten Vorrichtung 20 zur Umwandlung von thermischer Energie in chemische Energie und chemischer Zwischenspeicherung mithilfe eines pyrokatalytisch wirksamen Materials 13 zur elektrischen Stromerzeugung gezeigt, die kontinuierlich oder diskontinuierlich betrieben werden kann, wobei mittels alternierender Erwärmung und Abkühlung durch die thermischen Energieträger 24 hoher Temperatur T_{H} und Energieträger 25 niedriger Temperatur T_{K} das pyrokatalytisch wirksame Material 13 einer zeitlichen Temperaturänderung ΔT/Δt unterzogen und dadurch Wasserstoff gebildet wird, der in einer Brennstoffzelleneinheit in elektrische Energie umgewandelt wird.

Die erste Vorrichtung 20 zur Umwandlung von thermischer Energie in chemische Energie und von chemischer Energie in elektrische Energie mit chemischer Zwischenspeicherung gemäß Fig. 1 besteht zumindest aus
- einer Brennstoffzelleneinheit 19,
   zu der zumindest gehören
   - eine Anode 21 aus einem ersten gaspermeablen Stromkollektor 2 und einem anodenseitigen Katalysator 1,
   - eine Kathode 22 aus einem zweiten gaspermeablen Stromkollektor 4 und einem kathodenseitigen Katalysator 5,
   - ein zwischen Anode 21 und Kathode 22 befindlicher Elektrolyt 3,
   wobei sich zumindest die Anode 21, die Kathode 22 und der Elektrolyt 3 in einer Kammer 47 befinden, und
   - ein Sauerstoff-Zugang 23 zur Kammer 47 für eine Zufuhr von Sauerstoff oder Sauerstoffgemisch an den kathodenseitigen Katalysator 5,
- einem Fluidreservoir 17,
   zu dem zumindest gehören
   - ein pyrokatalytisch wirksames Material 13 mit mindestens einer polaren Achse,
   - ein erster thermischer Energieträger 24 mit hoher Temperatur T_{H},
   - ein zweiter thermischer Energieträger 25 mit niedriger Temperatur T_{K},
   und
- einem Gasdiffusionskanal 18,
wobei die Kammer 47 der Brennstoffzelleneinheit 19 mit dem Fluidreservoir 17 über den Gasdiffusionskanal 18 in Verbindung steht,
wobei das Fluidreservoir 17 zumindest das pyrokatalytisch wirksame Material 13 enthält, das zeitlichen Temperaturänderungen ΔT/Δt ausgesetzt ist, wobei
die Temperaturänderung ΔT/Δt durch einen alternierenden Wärmeübertrag über einen ersten thermischen Energieträger 24 mit hoher Temperatur T_{H} und einen zweiten thermischen Energieträger 25 mit niedriger Temperatur T_{K} am pyrokatalytisch wirksamen Material (Pyroelektrikum) 13 zur Umwandlung von thermischer Energie in chemische Energie realisiert wird, wobei bei hoher Temperatur T_{H} die einstellbare Maximaltemperatur T_{Hmax} am pyrokatalytisch wirksamen Material 13 unterhalb der Curie-Temperatur T_{C} des pyrokatalytisch wirksamen Materials 13 liegt,
wobei am Pyroelektrikum 13 eine Reduktion bzw. Oxidation eines Fluids 12 im Fluidreservoir 17 zu zumindest Wasserstoff als chemischem Energieträger stattfindet, wobei zumindest der Wasserstoff im Gasdiffusionskanal 18 vom Fluidreservoir 17 aus zum anodenseitigen Katalysator 1 strömt, wobei zur Umwandlung der chemischen Energie in elektrische Energie eine Oxidation des Wasserstoffs am anodenseitigen Katalysator 1 der Brennstoffzelleneinheit 19 stattfindet, und
wobei zumindest im Gasdiffusionskanal 18 eine chemische Zwischenspeicherung möglich ist.

An den beiden gaspermeablen Stromkollektoren 2 bzw. 4 von Anode 21 bzw. Kathode 22 kann jeweils zumindest eine Verbindungsleitung 26 bzw. 27 angeschlossen werden, die zu einem elektrischen Energieverbraucher 6 führt.

Es ist eine Schalt-/Steuereinheit 28 vorhanden, die in einer der beiden Verbindungsleitungen 26, 27 zur Abschaltung oder Zuschaltung des elektrischen Energieverbrauchers 6 eingebracht ist, wobei der elektrische Energieverbraucher 6 weitere elektrische Bauteile, z.B. Diode, Kondensator, Widerstand, Transformator, zur Formung eines elektrischen Stromes beinhalten kann.

Der erste thermische Energieträger 24 mit hoher Temperatur T_{H} und der zweite thermische Energieträger 25 mit niedriger Temperatur T_{K} sind über ein Wegeventil 48 mit einer Steuer-/Schalteinheit oder Regeleinheit 11 mit einer Durchflusseinheit 14 verbunden.

Mit dem Wegeventil 48 kann mittels der Steuer-/Schalteinheit/Regeleinrichtung 11 der Zufluss des ersten thermischen Energieträgers 24 mit hoher Temperatur T_{H} und des zweiten thermischen Energieträgers 25 mit niedriger Temperatur T_{K} gesteuert bzw. geregelt werden, wobei die Steuer-/Schalteinheit 11 auch mit einer Temperatursteuer-/Temperaturkontrolleinheit verbunden ist.

Das Pyrolelektrikum 13 steht in Verbindung mit der Durchflusseinheit 14, wobei die zeitlichen Temperaturänderungen ΔT/Δt in der Durchflusseinheit 14 zeitliche Temperaturänderungen ΔT/Δf im Pyroelektrikum 13 verursachen.

An das Fluidreservoir 17 ist ein Druckausgleichsbehälter 10 angebracht, der mit einem Absperrventil 9 zur Entlüftung verbunden ist.

Im Fluidreservoir 17 ist ein Fluid 12 vorhanden, wobei das Fluid 12 zumindest eine fluide Komponente mit kovalent gebundenen Wasserstoff oder ionisch gebundenen Wasserstoff enthält und das Fluid eine Flüssigkeit oder ein Gas sein kann.

Das Fluid 12 wird durch das Absperrventil 9 geleitet, wobei das Fluid 12 den Druckausgleichsbehälter 10 passiert und in das Fluidreservoir 17 übergeht.

Das Absperrventil 9 steuert oder regelt den Zufluss des Fluids 12, wobei das Absperrventil 9 wahlweise mit einer Steuer-/Kontrolleinheit verbunden ist.

Das Absperrventil 9 steuert oder regelt auch den Druck im Druckausgleichsbehälter 10 durch Entlüftung, wobei das Absperrventil 9 wahlweise mit einer Steuer/Kontrolleinheit verbunden ist

Ein Sauerstoff-Zugang 23 bringt Sauerstoff oder ein Sauerstoffgemisch in die Brennstoffzelleneinheit 19, wobei der Sauerstoff am kathodenseitigen Katalysator 5 reduziert wird.

Der Sauerstoff-Zugang 23 liefert Sauerstoff oder das Sauerstoffgemisch aus einer gasförmigen Umgebung und/oder aus anderen Quellen wie Gasverflüssigung oder aus kommerziellem Erwerb, wobei der Sauerstoff-Zugang 23 wahlweise über die Steuer-/Kontrolleinheit gesteuert bzw. geregelt wird.

Am Gasdiffusionskanal 18 kann optional ein Absperrventil 16 angebracht sein, wobei das Absperrventil 16 den Druck zwischen Fluidreservoir 17 und Brennstoffzelleneinheit 19 oder im Gasdiffusionskanal 18 steuert oder regelt, wobei das Absperrventil 16 wahlweise mit einer Steuer-/Kontrolleinheit verbunden ist

Am Gasdiffusionskanal 18 kann optional ein Absperrventil 16 angebracht sein, wobei über das Absperrventil 16 der Wasserstoff aus dem Gasdiffusionskanal 18 entnehmbar ist, wobei das Absperrventil 16 wahlweise mit einer Steuer-/Kontrolleinheit verbunden ist.

Zwischen Gasdiffusionskanal 18 und Fluidreservoir 17 ist optional eine Gastrennungseinheit 15 angebracht.

Die Gastrennungseinheit 15 trennt Gasantelle des Fluids 12, wobei Wasserstoff als chemischer Energieträger in den Gasdiffusionskanat 18 übertritt und andere fluide Stoffe im Fluidreservoir 17 zurückbehält.

An der Gastrennungseinheit 15 ist optional ein Absperrventil 7 zur Abführung des im Fluidreservoir 17 entstehenden Sauerstoffs angebracht.

Der in der Gastrennungseinheit 15 aufgetrennte Sauerstoff wird über das Absperrventil 7 in einer Rück-/Abführleitung 8, wobei die Rück-/Abführleitung 8 am Absperrventil 7 angebracht ist, zur Sauerstoffzufuhrleitung 23 oder in die Umgebung oder in optionale Behälter geleitet.

Dabei wird ein pyrokatalytisch wirksames Material 13, z. B. ein dünner LiNbO₃-Einkristall, welcher sich in einem Fluidreservoir 17 befindet, über eine Steuer- und Schalteinheit 11, die gepulst abwechseind den thermischen Energieträger 24 hoher Temperatur T_{H} und den thermischen Energieträger 25 tiefer Temperatur T_{K} durch ein an das Pyroelektrikum 13 anliegendes, als Durchflusseinheit 14 ausgebildetes Rohr strömen lässt, einer Temperaturänderung ΔT unterzogen. Der erforderliche elektrische Strom für eine Pumpe 11 zur Förderung der thermischen Energieträger kann z. B. direkt über den Abnehmer 6 der ersten Vorrichtung 20 entnommen werden. Eine vorgegebene zeitliche Temperaturänderung ΔT/Δt kann beispielsweise durch eine lineare Zunahme oder Abnahme oder die Modulation einer linearen Zunahme oder Abnahme mit einer Sinus-/Cosinusfunktion oder komplexere Verläufe durch Überlagerung von harmonischen Funktionen oder komplexeren mathematischen Funktionen sein. Die zeitliche Temperaturänderung ΔT/Δt kann mittels einer Regeleinrichtung 11 geregelt werden, dass die Arbeitsweise unterhalb der Curie-Temperatur T_{C} des eingesetzten pyrokatalytisch wirksamen Materials 13 erfolgt. Dies hat zur Folge, dass im Pyrolelektrikum 13 bzw. an der pyrokatalytisch wirksamen Oberfläche infolge der Spaltung eines Fluids (z. B. Wasser oder Wasserdampf) Wasserstoff gebildet wird, z. B. durch folgende Redoxreaktionen:

Generation von Wasserstoff H₂ an der pyrokatalytisch wirksamen Oberfläche des Pyroelektrikums 13 im Fluidreservoir 17 als Aufladungsvorgang:

| | |
|---|---|
| Redoxreaktionen: | 2 H₂O → 2H₂ + O₂, oder |
| | 2 H₂O → H₂ + H₂O₂ , bzw. H₂O₂ → H₂ + O₂, |

wobei der Wasserstoff H₂ anschließend der Brennstoffzelleneinheit 19 zugeführt werden kann. Der dabei entstehende Wasserstoff H₂ gelangt über den Gasdiffusionskanal 18, der mit einem Gas (z. B. Inertgas, N₂, H₂) gefüllt sein kann, in die Brennstoffzelleneinheit 19. Der Gasdiffusionskanal 18 kann bei keiner elektrischen Stromentnahme als Zwischenspeicher für den chemischen Energieträger Wasserstoff dienen. Bei Anschluss eines elektrischen Verbrauchers 6, d. h. bei elektrischer Stromentnahme, erfolgt die Oxidation des Wasserstoffs an der Anode 21 und die Reduktion des Sauerstoffs an der Luft-Kathode 22, und es wird elektrischer Strom nach folgenden möglichen Redoxreaktionen erzeugt:

Verbrennung von Wasserstoff H₂ in der Brennstoffzelleneinheit 19 als Entladungsvorgang:

| | |
|---|---|
| Anode: | 2H₂ → 4H⁺ + 4e⁻ |
| Kathode: | O₂ + 4H⁺ + 4e⁻ → 2H₂O |
| Redoxreaktion: | 2H₂ + O₂ 2 H₂O , oder |
| Kathode | O₂ + 4e⁻ → 2O²⁻ |
| Anode: | 2O²⁻ + 2H₂ → 2H₂O + 4e⁻ |
| Redoxreaktion: | 2H₂ + O₂ → 2 H₂O |

Optional können mittels einer Gastrennungseinheit 15 der bei der Spaltung von Wasser am Pyroelektrikum 13 ebenfalls auftretende Sauerstoff O₂ oder auch andere Reaktionsprodukte vom Wasserstoff abgetrennt und abgeleitet bzw. über eine selektive Rück-/Abführleitung 8 zur Kathode 22 zurück bzw. abgeleitet werden. Optional kann auch über eine Wasserstoffentnahmeeinheit 16 der generierte Wasserstoff der ersten Anordnung 42 entnommen werden, wobei die erste Anordnung zumindest den Gasdiffusionskanal 18 enthält. Im Falle des Einbaus der integrierten Gastrennungseinheit 15 und bei Entstehung von Wasser H₂O auf Seiten des Gasdiffusionskanals 18 kann optional die Wasserrück-/-abführung über eine Wasserrückführ-/-abführleitung 32 gewährleistet werden.
Analog könnte das pyrokatalytisch wirksame Material 13 auch polykristallin in Form eines Pulvers auf ein Trägermaterial in einer Matrix aufgebracht sein. Eine Beschichtung des Trägermaterials wäre ebenfalls denkbar.

### Ausführungsbeispiel 2

Die erfindungsgemäße zweite Vorrichtung 29 wird als zweites Ausführungsbeispiel in Fig. 2 mit Fig. 2a und Fig. 2b gezeigt, wobei die Fig. 2 eine schematische Darstellung einer erfindungsgemäßen zweiten Vorrichtung 29 zur Umwandlung von thermischer Energie in chemische Energie und chemischer Zwischenspeicherung mithilfe eines pyrokatalytisch wirksamen Materials 13 zur elektrischen Stromerzeugung zeigt, die kontinuierlich oder diskontinuierlich betrieben werden kann, wobei mittels einer gerichteten Bewegung eines Pyroelektrikum-Bandes 35 durch die thermischen Energieträger hoher Temperatur T_{H} und niedriger Temperatur T_{K} das pyrokatalytisch wirksame Material 13 einer zeitlichen Temperaturänderung AT/At unterzogen und dadurch Wasserstoff gebildet wird, der in einer Brennstoffzelleneinheit in elektrische Energie umgewandelt wird, wobei die Fig. 2a eine perspektivische Darstellung der zweiten Vorrichtung 29 und Fig. 2b eine vergrößerte Schnittdarstellung der Bandführung zeigen,

Die zweite Vorrichtung 29 besteht wie die erste Vorrichtung 20 zumindest auch aus den drei Einheiten Fluidreservoir 17, Gasdiffusionskanal 18 und Brennstoffzelleneinheit 19.
Im Fluidreservoir 17 sind der thermische Energieträger 24 mit hoher Temperatur T_{H} in Form eines ersten Behälters und der thermische Energieträger 25 mit niedriger Temperatur T_{K} in Form eines zweiten Behälters räumlich voneinander getrennt.

Mittels eines äußeren Wärmestroms 31 wird der im ersten Behälter 24 befindliche thermische Energieträger mit hoher Temperatur T_{H} erwärmt, wobei bei hoher Temperatur T_{H} die einstellbare Maximaltemperatur T_{Hmax} des pyrokatalytisch wirksamen Materials 13 unterhalb dessen Curie-Temperatur T_{C} liegt.

Die Trennung des thermischen Energieträgers 24 mit hoher Temperatur T_{H} vom thermischen Energieträger 25 mit niedriger Temperatur T_{K} erfolgt behälterbedingt durch einen thermischen Isolator 33, wobei der thermische Isolator 33 eine geringe Wärmekapazität besitzt und eine Wärmeleitung zwischen dem thermischen Energieträger 24 mit hoher Temperatur T_{H} und dem thermischen Energieträger 25 mit niedriger Temperatur T_{K} unterdrückt.

Hierbei besteht das Fluidreservoir 17 zumindest aus zwei Behältern 24, 25; jeweils einem ersten Behälter 24 für den thermischen Energieträger hoher T_{H} und einem zweiten Behälter 25 für den thermischen Energieträger niedriger Temperatur T_{K}, die über einen thermischen Isolator 33 entkoppelt sind. Dabei wird die hohe Temperatur T_{H} des thermischen Energieträgers 24 über einen Wärmestrom 31 von außen realisiert. Das pyrokatalytisch wirksame Material 13, z. B. ein LiNbO₃-Pulver, ist auf einem Pyroelektrikum-Band/-Träger 35 aufgebracht oder bildet dieses selbst und durchläuft mittels Bandführungselementen 30 zyklisch die beiden Behälter 24, 25 mit den unterschiedlichen thermischen Energieträgern, und wird dadurch einer ständig wechselnden Temperatur innerhalb einer ständigen Temperaturänderung ΔT unterzogen. Der erforderliche elektrische Strom für die Bandführungselemente 30 kann z. B. direkt über den Abnehmer 6 der Vorrichtung 29 entnommen werden. Die Temperatur des thermischen Energieträgers hoher Temperatur T_{H} wird mittels einer Regeleinrichtung 11, entsprechend wie in Fig. 1, geregelt, sodass die Arbeitsweise unterhalb der Curie-Temperatur T_{C} des pyrokatalytisch wirksamen Materials 13 erfolgt. Dies hat zur Folge, dass im Pyrolelektrikum 13 bzw. an der pyrokatalytisch wirksamen Oberfläche des Pyroelektrikums 13 infolge der Spaltung des Fluids, z. B. Wasser oder Wasserdampf, Wasserstoff gebildet wird, z. B. durch folgende Redoxreaktionen:

Generierung von Wasserstoff H₂ an der pyrokatalytisch wirksamen Oberfläche im Fluidreservoir 17 als Aufladungsvorgang:

| | |
|---|---|
| Redoxreaktionen: | 2 H₂O → 2H₂ + O₂, oder |
| | 2 H₂O → H₂ + H₂O₂ , bzw. H₂O₂ → H₂ + O₂ , |

wobei der Wasserstoff H₂ anschließend der Brennstoffzelleneinheit 19 zugeführt werden kann. Der dabei entstehende Wasserstoff H₂ gelangt über einen Gasdiffusionskanal 18, der mit einem Gas (z. B. Inertgas, N₂, H₂) gefüllt sein kann, in die Brennstoffzelleneinheit 19. Der Gasdiffusionskanal 18 kann dabei als Zwischenspeicher für den chemischen Energieträger dienen. Bei Anschluss eines elektrischen Verbrauchers 6 erfolgt die Oxidation des Wasserstoffs an der Anode 21 und die Reduktion des Sauerstoffs an der Luft-Kathode 22 und es wird elektrischer Strom nach folgenden möglichen Redoxreaktionen erzeugt:

Verbrennung von Wasserstoff H₂ in der Brennstoffzelleneinheit 19 als Entladungsvorgang:

| | |
|---|---|
| Anode: | 2H₂ → 4H⁺ + 4e⁻ |
| Kathode: | O₂ + 4H⁺ + 4e⁻ → 2H₂O |
| Redoxreaktion: | 2H₂ + O₂ → 2 H₂O, oder |
| Kathode | O₂ + 4e⁻ → 2O²⁻ |
| Anode: | 2O²⁻ + 2H₂ → 2H₂O + 4e⁻ |
| Redoxreaktion: | 2H₂ + O₂ → 2 H₂O |

Optional können mittels einer Gastrennungseinheit 15 in Form eines Membrankontraktors der bei der Spaltung eines Fluids (z. B. Wasser oder Wasserdampf) am pyrokatalytisch wirksamen Material 13 ebenfalls auftretende Sauerstoff oder auch andere Reaktionsprodukte vom Wasserstoff H₂ abgetrennt und abgeleitet bzw., wie im ersten Ausführungsbeispiel beschrieben, über eine selektive Rück-/Abführleitung 8 zur Kathode zurück bzw. abgeleitet werden. Optional kann auch, wie im ersten Ausführungsbeispiel beschrieben, über eine Wasserstoffentnahmeeinheit 16 der generierte Wasserstoff der zweiten Vorrichtung 29 entnommen werden. Im Falle der integrierten Gastrennungseinheit 15 und bei Entstehung von H₂O auf Seiten des Gasdiffusionskanals 18 kann optional, wie im ersten Ausführungsbeispiel beschrieben, die Wasserrück-/-abführung, über eine Wasserrück-/-abführleitung 32 gewährleistet werden.

### Ausführungsbeispiel 3

Die erfindungsgemäße dritte Vorrichtung 36 wird als drittes Ausführungsbeispiel in Fig. 3 mit Fig. 3a und Fig. 3b gezeigt, wobei Fig. 3 eine schematische Darstellung einer erfindungsgemäßen dritten Vorrichtung 36 zur Umwandlung von thermischer Energie in chemische Energie und chemischer Zwischenspeicherung mithilfe eines pyrokatalytisch wirksamen Materials 13 zur elektrischen Stromerzeugung zeigt, die kontinuierlich oder diskontinuierlich betrieben werden kann, wobei mittels einer gerichteten Bewegung eines Pyroelektrikum-Bandes 35 durch die thermischen Energieträger hoher Temperatur T_{H} und niedriger Temperatur T_{K} das pyrokatalytisch wirksame Material 13 einer zeitlichen Temperaturänderung ΔT/Δt unterzogen und dadurch Wasserstoff gebildet wird, der in einer Brennstoffzelleneinheit in elektrische Energie umgewandelt wird, wobei Fig. 3a eine perspektivische Darstellung der dritten Vorrichtung 36 und Fig. 3b eine Schnittdarstellung der dritten Anordnung 44 der dritten Vorrichtung 36 zeigen.

Die dritte Vorrichtung 36 besteht wie die erste Vorrichtung 20 und die zweite Vorrichtung 29 zumindest aus den drei Einheiten Fluidreservoir 17, Gasdiffusionskanal 18 und Brennstoffzelleneinheit 19.

Eine Trennung des thermischen Energieträgers 24 mit hoher Temperatur T_{H} und des thermischen Energieträgers 25 mit niedriger Temperatur T_{K} erfolgt in Fig. 3 behälterbedingt durch einen thermischen Isolator 33, wobei der thermische Isolator 33 eine geringe Wärmekapazität und Wärmeleitfähigkeit besitzt und eine Wärmeleitung zwischen dem thermischen Energieträger 24 mit hoher Temperatur T_{H} und dem thermischen Energieträger 25 mit niedriger Temperatur T_{K} unterdrückt.

Im thermischen Isolator 33 ist optional zumindest eine Dichtung 37 eingebracht, wobei die Dichtung 37 einen Temperaturausgleich zwischen dem thermischen Energieträger 24 mit hoher Temperatur T_{H} und dem thermischen Energieträger 25 mit niedriger Temperatur T_{K} unterdrückt und wobei die Dichtung 37 einen regel-/steuerbaren Materialdurchgang ermöglicht.

Das Pyrolelektrikum 13 ist als Schicht auf einem verformbaren Trägermaterial 35 aufgebracht.

Der mit dem Pyroelektrikum 13 beschichtete Pyroelektrikum-Träger 35 wird durch Bandführungselemente 30 durch den thermischen Energieträger 24 mit hoher Temperatur T_{H} und den thermischen Energieträger 25 mit niedriger Temperatur T_{K} geführt, die als Behälter ausgebildet sein können, wobei die gerichtete Bewegung zeitliche Temperaturänderungen ΔT/Δt im Pyroelektrikum 13 verursacht.

Der mit dem Pyroelektrikum 13 beschichtete Pyroelektrikum-Träger 35 wird ausschließlich durch Dichtungen 37 hindurch im thermischen Isolator 33 geführt, wobei der mit dem Pyroelektrikum 13 beschichtete Pyroelektrikum-Träger 35 auch ausschließlich entlang des thermischen Isolators 33 geführt werden kann, wobei der mit dem Pyroelektrikum 13 beschichtete Pyroelektrikum-Träger 35 entweder im thermischen Isolator 33 durch die Dichtungen 37 oder entlang des thermischen Isolators 33 geführt werden kann.

Hierbei besteht das Fluidreservoir 17 zumindest aus zwei Behältern 24, 25; jeweils einem für den thermischen Energieträger hoher T_{H} und den thermischen Energieträger niedriger Temperatur T_{K}, die über einen thermischen Isolator 33 entkoppelt sind. Dabei wird die hohe Temperatur T_{H} des thermischen Energieträgers 24 über einen Wärmestrom 31 von außen realisiert. Das pyrokatalytisch wirksame Material 13, z. B. ein LiNbO₃-Pulver, ist auf einem Pyroelektrikum-Band/-Träger 35 aufgebracht oder bildet dieses selbst und durchläuft über eine von Bandführungselementen 30 definierte Bandführung zyklisch die beiden thermischen Energieträger-Behälter 24, 25, und wird dadurch einer ständigen Temperaturänderung zwischen hoher Temperatur T_{H} und niedrigerer Temperatur T_{K} unterzogen. Hierbei leiten die Bandführungselemente 30 das Pyroelektrikum-Band 35 durch den Isolator 33, wobei über Dichtungen 37 der Fluidaustausch der thermischen Energieträger 24, 25 unterdrückt wird. Der erforderliche Strom für die Bandführungselemente 30 kann z. B. direkt über den Abnehmer 6 der Anordnung 44 entnommen werden. Die Temperatur des thermischen Energieträger-Behälters 24 hoher Temperatur T_{H} wird mittels einer Regeleinrichtung 11, wie in Fig. 1, geregelt, so dass die Arbeitsweise unterhalb der Curie-Temperatur des pyrokatalytisch wirksamen Materials 13 erfolgt. Dies hat zur Folge, dass im Pyroelektrikum 13 bzw. an der pyrokatalytisch wirksamen Oberfläche infolge der Spaltung eines Fluids (z. B. Wasser oder Wasserdampf) Wasserstoff gebildet wird, z. B. durch folgende Redoxreaktionen:

Generierung von Wasserstoff H₂ an der pyrokatalytisch wirksamen Oberfläche im Fluidreservoir 17 als Aufladungsvorgang:

| | |
|---|---|
| Redoxreaktionen: | 2 H₂O → 2H₂ + O₂, oder |
| | 2 H₂O → H₂ + H₂O₂, bzw. H₂O₂ → H₂ + O₂ , |

Der dabei entstehende Wasserstoff H₂ gelangt über einen Gasdiffusionskanal 18, der mit einem Gas, z. B. Inertgas, N₂ oder H₂, gefüllt sein kann, in die Brennstoffzelleneinheit 19. Der Gasdiffusionskanal 18 als Teil der Anordnung 44 kann dabei als Zwischenspeicher für den chemischen Energieträger dienen. Bei Anschluss eines elektrischen Verbrauchers 6 erfolgt die Oxidation des Wasserstoffs an der Anode 21 und die Reduktion des Sauerstoffs an der Luft-Kathode 22 und es wird elektrischer Strom nach folgender möglicher Redoxreaktionen erzeugt:

Verbrennung von Wasserstoff H₂ in der Brennstoffzelleneinheit 19 als Entladungsvorgang:

| | |
|---|---|
| Anode: | 2H₂ → 4H⁺ + 4e⁻ |
| Kathode: | O₂ + 4H⁺ + 4e⁻ → 2H₂O |
| Redoxreaktion: | 2H₂ + O₂ → 2 H₂O, oder |
| Kathode | O₂ + 4e⁻ → 2O²⁻ |
| Anode: | 2O²⁻ + 2H₂ → 2H₂O + 4e⁻ |
| Redoxreaktion: | 2H₂ + O₂ → 2 H₂O |

Optional können mittels einer Gastrennungseinheit 15 der bei der Spaltung von Wasser am Pyroelektrikum 13 ebenfalls auftretende Sauerstoff oder auch andere Reaktionsprodukte vom Wasserstoff abgetrennt und abgeleitet bzw., wie im ersten Ausführungsbeispiel beschrieben, über eine selektive Rück-/Abführleitung 8 zur Kathode 22 zurück- bzw. abgeleitet werden. Optional kann auch über eine Wasserstoffentnahmeeinheit 16 der generierte Wasserstoff der dritten Anordnung 44 entnommen werden. Im Falle der integrierten Gastrennungseinheit 15 und bei Entstehung von Wasser H₂O auf Seiten des Gasdiffusionskanals 18 kann optional die Wasserrück-/-abführung über eine Wasserrück-/-abführleitung 32 gewährleistet werden.

### Ausführungsbeispiel 4

Die erfindungsgemäße vierte Vorrichtung 38 wird als viertes Ausführungsbeispiel in Fig. 4 mit Fig. 4a und Fig. 4b gezeigt, wobei die Fig. 4 eine schematische Darstellung einer erfindungsgemäßen vierten Vorrichtung 38 zur Umwandlung von thermischer Energie in chemische Energie und chemischer Zwischenspeicherung mithilfe eines pyrokatalytisch wirksamen Materials 13 zur elektrischen Stromerzeugung zeigt, die kontinuierlich oder diskontinuierlich betrieben werden kann, wobei mittels einer Drehung des rotationssymmetrischen Trägerkörpers 41 mit pyrokatalytisch wirksamer Oberfläche 13 durch die thermischen Energieträger 24, 25 hoher Temperatur und niedriger Temperatur hindurch das pyrokatalytisch wirksame Material 13 einer zeitlichen Temperaturänderung ΔT/Δt unterzogen und dadurch Wasserstoff gebildet wird, der in der Brennstoffzelleneinheit 19 in elektrische Energie umgewandelt wird, wobei Fig. 4a eine perspektivische Darstellung der vierten Vorrichtung 38 und Fig. 4b eine Schnittdarstellung der vierten Anordnung 45 der vierten Vorrichtung 38 zeigen.
Die vierte Vorrichtung 38 besteht wie die erste Vorrichtung 20 und die zweite Vorrichtung 29 und die dritte Vorrichtung 36 zumindest aus den drei Einheiten Fluidreservoir 17, Gasdiffusionskanal 18 und Brennstoffzelleneinheit 19.

Das Pyroelektrikum 13 ist auf einem rotationssymmetrischen Körper 41 aufgebracht.

Der mit dem Pyroelektrikum 13 beschichtete rotationssymmetrische Körper 41 kann mit einer externen Bewegungseinheit 49 in Rotation versetzt werden.

Zwischen dem mit Pyroelektrikum 13 beschichteten rotationssymmetrischen Körper 41 und der räumlichen Begrenzung des Fluidreservoirs 17 sind Dichtungen 37 angebracht.

Die Dichtungen 37 und der mit dem Pyroelektrikum 13 beschichtete rotationssymmetrische Körper 41 realisieren eine räumliche Trennung des thermischen Energieträgers 24 mit hoher Temperatur T_{H} vom thermischen Energieträgers 25 mit niedriger Temperatur T_{K}, wobei die Dichtungen 37 einen Temperaturausgleich zwischen dem thermischen Energieträger 24 mit hoher Temperatur T_{H} und dem thermischen Energieträger 25 mit niedriger Temperatur T_{K} unterdrücken.

Hierbei besteht das Fluidreservoir 17 zumindest aus zwei Behältern 24, 25; jeweils einen ersten Behälter 24 für den thermischen Energieträger hoher T_{H} und einem zweiten Behälter 25 für den thermischen Energieträger niedriger Temperatur T_{K}, die durch einen rotationssymmetrischen, drehbar gelagerten Körper 41, wobei eine Strukturierung des Körpers 41 entlang der Rotationsrichtung zur Optimierung bzw. Maximierung großer Oberfläche einstellbar ist, mit pyrokatalytisch wirksamer Oberfläche 13, z. B. ein LiNbO₃-Pulver und eine thermisch isolierende Dichtung 37 zur Außenwand des Fluidreservoirs 17 voneinander entkoppelt sind. Dabei wird die hohe Temperatur T_{H} des thermischen Energieträgers 24 über einen Wärmestrom 31 von außen realisiert. Das pyrokatalytisch wirksame Material 13, z. B. ein LiN-bO₃-Pulver, durchläuft während der Drehung des rotationssymmetrischen Körpers 41 zyklisch die beiden thermischen Energieträger-Behälter 24, 25, und wird dadurch einer ständigen Temperaturänderung unterzogen. Der erforderliche elektrische Strom für die Drehung des rotationssymmetrischen Körpers 41 kann z. B. direkt über den Abnehmer 6 der Anordnung entnommen werden. Die Temperatur des thermischen Energieträger-Behälters 24 hoher Temperatur T_{H} wird mittels einer Regeleinrichtung 11, wie in Fig. 1, geregelt, sodass die Arbeitsweise unterhalb der Curie-Temperatur T_{C} des pyrokatalytisch wirksamen Materials 13 erfolgt Dies hat zur Folge, dass im Pyroelektrikum 13 bzw. an der pyrokatalytisch wirksamen Oberfläche infolge der Spaltung eines Fluids (z. B. Wasser oder Wasserdampf) Wasserstoff gebildet wird, z. B. durch folgende Redoxreaktionen:

Generierung von Wasserstoff H₂ an der pyrokatalytisch wirksamen Oberfläche im Fluidreservoir 17 als Aufladungsvorgang:

| | |
|---|---|
| Redoxreaktionen: | 2 H₂O → 2H₂ + O₂, oder |
| | 2 H₂O → H₂ + H₂O₂ , bzw. H₂O₂ → H₂ + O₂ , |

wobei der Wasserstoff H₂ anschließend der Brennstoffzelleneinheit 19 zugeführt werden kann. Der dabei entstandene Wasserstoff gelangt über einen Gasdiffusionskanal 18, der mit einem Gas, z. B. Inertgas, N₂, H₂, gefüllt sein kann, in die Brennstoffzelleneinheit 19. Der Gasdiffusionskanal 18 als Teil der vierten Anordnung 45 kann dabei als Zwischenspeicher für den chemischen Energieträger dienen. Bei Anschluss eines elektrischen Verbrauchers 6 erfolgt die Oxidation des Wasserstoffs an der Anode 21 und die Reduktion des Sauerstoffs an der Luft-Kathode 22 und es wird elektrischer Strom nach folgenden mögliche Redoxreaktionen erzeugt:

Verbrennung von Wasserstoff H₂ in der Brennstoffzelleneinheit 19 als Entladungsvorgang:

| | |
|---|---|
| Anode: | 2H₂ → 4H⁺ + 4e⁻ |
| Kathode: | O₂ + 4H⁺ + 4e⁻ → 2H₂O |
| Redoxreaktion: | 2H₂ + O₂ → 2 H₂O, oder |
| Kathode | O₂ + 4e⁻ → 2O²⁻ |
| Anode: | 2O²⁻ + 2H₂ → 2H₂O + 4e⁻ |
| Redoxreaktion: | 2H₂ + O₂ → 2H₂O |

Optional können mittels einer Gastrennungseinheit 15 der bei der Spaltung eines Fluids (z. B. Wasser) am Pyroelektrikum 13 ebenfalls auftretende Sauerstoff O₂ oder auch andere Reaktionsprodukte vom Wasserstoff abgetrennt und abgeleitet über eine selektive Rück-/Abführleitung 8 zur Kathode 22 zurück bzw. abgeleitet werden. Optional kann auch, wie im ersten Ausführungsbeispiel beschrieben ist, über eine Wasserstoffentnahmeeinheit 16 der generierte Wasserstoff H₂ der vierten Anordnung 45 entnommen werden. Im Falle der integrierten Gastrennungseinheit 15 und bei Entstehung von Wasser auf Seiten des Gasdiffusionskanals 18 kann optional die Wasserrück-/-abführung über eine Wasserrück-/-abführleitung 32 gewährleistet werden.

### Ausführungsbeispiel 5

Die erfindungsgemäße fünfte Vorrichtung 40 wird als fünftes Ausführungsbeispiel in Fig. 5 mit Fig. 5a und Fig. 5b gezeigt, wobei die Fig. 5 eine schematische Darstellung der erfindungsgemäßen fünften Vorrichtung 40 zur Umwandlung von thermischer Energie in chemische Energie und chemischer Zwischenspeicherung mithilfe eines pyrokatalytisch wirksamen Materials 13 zur elektrischen Stromerzeugung zeigt die kontinuierlich oder diskontinuierlich betrieben werden kann. wobei mittels alternierender Erwärmung und Abkühlung durch die thermischen Energieträger hoher Temperatur T_{H} und niedriger Temperatur T_{K} das pyrokatalytisch wirksame Material 13 einer zeitlichen Temperaturänderung ΔT/Δt unterzogen und dadurch Wasserstoff gebildet wird, der in einer zylinderartig mehrschichtig aufgebauten Brennstoffzelleneinheit in elektrische Energie umgewandelt wird, wobei Fig. 5a eine perspektivische Darstellung der fünften Vorrichtung 40 und Fig. 5b eine Schnittdarstellung der fünften Anordnung 46 der fünften Vorrichtung 40 zeigen.

Die fünfte Vorrichtung 40 besteht wie die vordem genannten Vorrichtungen 20, 29, 36, 38 ebenfalls zumindest aus den drei Einheiten Fluidreservoir 17, Gasdiffusionskanal 18 und Brennstoffzelleneinheit 19.

Die fünfte Vorrichtung 40 zum Umwandeln von thermischer Energie in chemische Energie und von chemischer Energie in elektrische Energie mit chemischer Zwischenspeicherung,
besteht zumindest aus
- einer zylinderartig mehrschichtig aufgebauten Brennstoffzelleneinheit 19, zu der zumindest gehören
   - eine hohlzylinderförmige Anode 21 aus einem ersten gaspermeablen Stromkollektor 2 und einem anodenseitigen Katalysator 1,
   - eine hohlzylinderförmige Kathode 22 aus einem zweiten gaspermeablen Stromkollektor 4 und einem kathodenseitigen Katalysator 5
   - ein zwischen der hohlzylinderförmigen Anode 21 und der hohlzylinder förmigen Kathode 22 befindlicher hohlzylinderförmig angeordneter Elektrolyt 3,
   wobei sich zumindest die Anode 21, die Kathode 22 und der Elektrolyt 3 in einer hohlzylindrischen Kammer 47 befinden, und
   - ein Sauerstoff-Zugang 23 zur hohlzylindrischen Kammer 47 für eine Zufuhr von Sauerstoff oder Sauerstoffgemisch an den kathodenseitigen Katalysator 5,
- einem hohlzylinderartigen Fluidreservoir 17.
   zu dem zumindest gehören
   - ein axial mittig angeordnetes Pyroelektrikum 13, das von dem hohlzylindrischen Fluidreservoir 17 umgeben ist.
   - ein erster thermischer Energieträger 24 mit hoher Temperatur T_{H},
   - ein zweiter thermischer Energieträger 25 mit niedriger Temperatur T_{K},
   und
- ein Gasdiffusionskanal 18, der als Freiraum das Fluidreservoir 17 umgibt,
wobei die hohlzylinderförmige Kammer 47 der Brennstoffzelleneinheit 19 mit dem Fluidreservoir 17 über dem Gasdiffusionskanal 18 in Verbindung steht, wobei das Fluidreservoir 17 zumindest das axial mittig angeordnete, stabförmige Pyroelektrikum 13 enthält, das zeitlichen Temperaturänderungen ΔT/Δt des durch das Fluidreservoir 17 strömenden Fluids abwechselnd ausgesetzt ist, wobei die Temperaturänderung ΔT/Δt durch den alternierenden Wärmeübertrag über einen ersten thermischen Energieträger 24 mit hoher Temperatur T_{H} und einen zweiten thermischen Energieträger 25 mit niedriger Temperatur T_{K} am Pyroelektrikum 13 zur Umwandlung von thermischer Energie in chemische Energie realisiert wird, wobei bei hoher Temperatur T_{H} die einstellbare Maximaltemperatur T_{Hmax} des pyrokatalytisch wirksamen Materials 13 unterhalb dessen Curie-Temperatur T_{C} liegt,
wobei am Pyroelektrikum 13 eine Reduktion bzw. Oxidation des Fluids 12 im Fluidreservoir 17 zu zumindest Wasserstoff als chemischem Energieträger stattfindet, wobei zumindest der Wasserstoff über eine wasserstoffdurchlässige und wasserabweisende hohlzylindrische Membran 39 in den Gasdiffusionskanal 18 vom Fluidreservoir 17 aus zum anodenseitigen Katalysator 1 strömt, wobei zur Umwandlung der chemischen Energie in elektrische Energie eine Oxidation des Wasserstoffs am anodenseitigen Katalysator 1 der Brennstoffzelleneinheit 19 stattfindet, und
wobei zumindest im Gasdiffusionskanal 18 eine chemische Zwischenspeicherung möglich ist.

Dabei wird ein Pyroelektrikum 13, z. B. ein dünner stabförmiger LiNbO₃-Einkristall oder ein auf einen stabförmig ausgebildeten Träger 35 aufgebrachtes LiNbO₃-Pulver, wobei der Pyroelektrikum-Träger 35 sich zentral axial mittig im hohlzylinderartig umgebenden Fluidreservoir 17 befinden kann und zur Optimierung bzw. Maximierung großer pyrokatalytischer Oberfläche strukturiert sein kann, über eine Steuer- und Schalteinheit 11, die geputst abwechseind die thermischen Energieträger 24 hoher T_{H} bzw. 25 tiefer Temperatur T_{K} durch das Fluidreservoir 17 strömen lässt, einer ständigen Temperaturänderung unterzogen. Der erforderliche elektrische Strom für eine Pumpe zum abwechselnden Einströmen von Fluid zweier unterschiedlicher Temperaturen T_{H} und T_{K} kann z. B. direkt über den Abnehmer 6 der Vorrichtung 40 entnommen werden. Eine vorgegebene zeitliche Temperaturänderung ΔT/Δt kann beispielsweise durch eine lineare Zu- oder Abnahme oder die Modulation einer linearen Zunahme oder Abnahme mit einer Sinus-/Cosinusfunktion oder komplexere Verläufe durch Überlagerung von harmonischen Funktionen oder komplexeren mathematischen Funktionen sein. Die zeitliche Temperaturänderung wird mittels einer Regeleinrichtung (nicht eingezeichnet) geregelt, so dass die Arbeitsweise unterhalb der Curie-Temperatur T_{C} des pyrokatalytisch wirksamen Materials 13 erfolgt. Dies hat zur Folge, dass im Pyroelektrikum 13 bzw. an der pyrokatalytisch wirksamen Oberfläche infolge der Spaltung eines Fluids (z. B. Wasser oder Wasserdampf) Wasserstoff als chemischer Energieträger gebildet wird, z. B. durch folgende Redoxreaktionen:

Generierung von Wasserstoff H₂ an der pyrokatalytisch wirksamen Oberfläche im Fluidreservoir 17 als Aufladungsvorgang:

| | |
|---|---|
| Redoxreaktionen: | 2 H₂O → 2H₂ + O₂, oder |
| | 2 H₂O → H₂ + H₂O₂ bzw. H₂O₂ → H₂ + O₂. |

Der dabei durch Umwandlung von thermischer Energie in chemische Energie entstehende Wasserstoff gelangt über die wasserstoff-durchlässige wasserabweisende, das Fluidreservoir 17 hohlzylinderförmig umgebende Membran 39, die das Fluidreservoir 17 umschließt, in den umgebenden Gasdiffusionskanal 18, der mit einem Gas, z. B. Inertgas, N₂, H₂, gefüllt sein kann, und weiter in die umgebende Brennstoffzelleneinheit 19, die in hohlzylindriger Form den inneren Aufbau der Kammer 47 umschließt. Der Gasdiffusionskanal 18 als Teil der Anordnung 46 kann, falls keine elektrische Stromentnahme erfolgt, dabei als Zwischenspeicher für den chemischen Energieträger dienen. Bei Anschluss eines elektrischen Verbrauchers 6 an Anode 21 und Kathode 22 erfolgt die Oxidation des Wasserstoffs an der Anode 21 und die Reduktion des Sauerstoffs an der Luft-Kathode 22 als Entladungsvorgang und es wird elektrischer Strom durch die Umwandlung von chemischer Energie in elektrische Energie nach folgender möglicher Redoxreaktionen erzeugt:

Verbrennung von Wasserstoff H₂ in der Brennstoffzelleneinheit 19 als Entladungsvorgang:

| | |
|---|---|
| Anode: | 2H₂ → 4H⁺ + 4e⁻ |
| Kathode: | O₂ + 4H⁺ + 4e⁻ → 2H₂O |
| Redoxreaktion: | 2H₂ + O₂ → 2 H₂O, oder |
| Kathode | O₂ + 4e⁻ → 2O²⁻ |
| Anode: | 2O²⁻ + 2H₂ → 2H₂O + 4^{e-} |
| Redoxreaktion: | 2H₂ + O₂ → 2 H₂O |

Optional kann auch über eine Wasserstoffentnahmeeinheit 16 der generierte Wasserstoff der fünften Anordnung 46 für eine mögliche erweiterte chemische Zwischenspeicherung entnommen werden.

In der Anordnung des Pyroelektrikums 13 zur Brennstoffzelleneinheit 19 gibt es in den Ausführungsbeispielen zumindest einen wesentlichen Unterschied:
Im ersten bis vierten Ausführungsbeispiel befindet sich das Fluidreservoir 17 mit dem Pyroelektikum 13 außerhalb der Brennstoffzelleneinheit 19. Im fünften Ausführungsbeispiel ist das Fluidreservoir 17 mit dem Pyroelektrikum 13 innerhalb der Brennstoffzelleneinheit 19 angeordnet.

Ein weiterer Vorteil besteht darin, dass im Prinzip alle kommerziell erhältlichen Brennstoffzellen in der Brennstoffzelleneinheit nutzbar und das Wasser als Reaktionsprodukt der Verbrennung des Wasserstoffs in der Brennstoffzelle sowohl kathoden- als auch anodenseitig entstehen kann, wobei das Wasser je nach Ausbildung der Brennstoffzelleneinheit flüssig oder als Dampf abgeführt werden kann.

### Bezugszeichenliste

- 1: anodenseitiger Katalysator
- 2: erster gaspermeabler Stromkollektor
- 3: Elektrolyt
- 4: zweiter gaspermeabler Stromkollektor
- 5: kathodenseitiger Katalysator
- 6: Einrichtung zum elektrischen Energieverbrauch
- 7: optionales Absperrventil
- 8: optionale Sauerstoffrück-/Abführleitung
- 9: Absperrventil mit Entlüftung
- 10: Druckausgleichsbehälter
- 11: Steuer-/Schalteinheit/Regeleinrichtung
- 12: Fluid / Wasser
- 13: pyrokatalytisch wirksames Material/Pyroelektrikum
- 14: Durchflusseinheit
- 15: optionale Gastrennungseinheit/Membrankontaktor
- 16: optionale Gasentnahmeeinheit
- 17: Fluidreservoir
- 18: Gasdiffusionskanal
- 19: Brennstoffzelleneinheit
- 20: erste Vorrichtung
- 21: Anode
- 22: Kathode
- 23: Sauerstoffzugang
- 24: erster thermischer Energieträger mit hoher Temperatur T_{H}
- 25: zweiter thermischer Energieträger mit niedriger Temperatur T_{K}
- 26: erste Verbindungsleitung
- 27: zweite Verbindungsleitung
- 28: Schalt-/Steuereinrichtung
- 29: zweite Vorrichtung
- 30: Bandführungselement/Rolle
- 31: Wärmestrom
- 32: optionale Wasserrück-/Abführleitung
- 33: thermischer Isolator
- 35: Pyroelektrikum-Band/-Träger
- 36: dritte Vorrichtung
- 37: Dichtungen
- 38: vierte Vorrichtung
- 39: wasserstoff-durchlässige wasserabweisende Membran
- 40: fünfte Vorrichtung
- 41: rotationssymmetrischer Körper
- 42: erste Anordnung zur Zwischenspeicherung
- 43: zweite Anordnung zur Zwischenspeicherung
- 44: dritte Anordnung zur Zwischenspeicherung
- 45: vierte Anordnung zur Zwischenspeicherung
- 46: fünfte Anordnung zur Zwischenspeicherung
- 47: Kammer
- 48: Wegeventil
- 49: Rotationseinrichtung

- ΔT: Temperaturänderung
- ΔT/Δt: zeitliche Temperaturänderung
- T_{H}: hohe Temperatur
- T_{Hmax}: Maximaltemperatur
- T_{K}: niedrige Temperatur

## Patentansprüche

1. Vorrichtung (20, 29, 36, 38, 40) zum Umwandeln von thermischer Energie in chemische Energie und von chemischer Energie in elektrische Energie, bestehend zumindest aus
- einer Brennstoffzelleneinheit (19),
zu der zumindest gehören
- eine Anode (21) aus einem ersten gaspermeablen Stromkollektor (2) und einem anodenseitigen Katalysator (1),
- eine Kathode (22) aus einem zweiten gaspermeablen Stromkollektor (4) und einem kathodenseitigen Katalysator (5),
- ein zwischen Anode (21) und Kathode (22) befindlicher Elektrolyt (3), wobei sich zumindest die Anode (21), die Kathode (22) und der Elektrolyt (3) in einer Kammer (47) befinden, und
- ein Sauerstoff-Zugang (23) zur Kammer (47) für eine Zufuhr von Sauerstoff oder Sauerstoffgemisch an den kathodenseitigen Katalysator (5),
- einem Fluidreservoir (17),
zu dem zumindest gehören
- ein pyrokatalytisch wirksames Material (13) mit mindestens einer polaren Achse,
- ein erster thermischer Energieträger (24) mit hoher Temperatur T_{H},
- ein zweiter thermischer Energieträger (25) mit niedriger Temperatur T_{K},
und
- einem Gasdiffusionskanal (18),
wobei die Kammer (47) der Brennstoffzelleneinheit (19) mit dem Fluidreservoir (17) über den Gasdiffusionskanal (18) in Verbindung steht,
wobei das Fluidreservoir (17) zumindest das pyrokatalytisch wirksame Material (13) enthält, das zeitlichen Temperaturänderungen ΔT/Δt ausgesetzt ist, wobei die Temperaturänderung ΔT/Δt durch einen alternierenden Wärmeübertrag über einen ersten thermischen Energieträger (24) mit hoher Temperatur T_{H} und einen zweiten thermischen Energieträger (25) mit niedriger Temperatur T_{K} am pyrokatalytisch wirksamen Material (13) zur Umwandlung von thermischer Energie in chemische Energie realisiert wird, wobei bei hoher Temperatur T_{H} eine einstellbare Maximaltemperatur T_{Hmax} des pyrokatalytisch wirksamen Materials (13) unterhalb der Curie-Temperatur T_{C} des pyrokatalytisch wirksamen Materials (13) liegt,
wobei am pyrokatalytisch wirksamen Material (13) eine Reduktion bzw. Oxidation eines Fluids (12) im Fluidreservoir (17) zu zumindest Wasserstoff als chemischem Energieträger stattfindet, wobei zumindest der Wasserstoff im Gasdiffusionskanal (18) vom Fluidreservoir (17) aus zum anodenseitigen Katalysator (1) strömt, an dem zur Umwandlung der chemischen Energie in elektrische Energie eine Oxidation des Wasserstoffs stattfindet, und
wobei zumindest im Gasdiffusionskanal (18) als Teil einer Anordnung (42, 43, 44, 45, 46) zur Zwischenspeicherung eine chemische Zwischenspeicherung möglich ist.

2. Vorrichtung nach Anspruch 1,
**dadurch gekennzeichnet,**
**dass** die Anode (21) und der anodenseitige Katalysator (1) sowie die Kathode (22) und der kathodenseitige Katalysator (5) aus gleichem Material bestehen.

3. Vorrichtung nach Anspruch 1,
**dadurch gekennzeichnet,**
**dass** der erste thermische Energieträger (24) und der zweite thermische Energieträger (25) identisch sind, wobei der zweite thermische Energieträger (25) thermisch fluktuiert.

4. Vorrichtung nach Anspruch 1,
**dadurch gekennzeichnet,**
**dass** als pyrokatalytisch wirksames Material (13) mit mindestens einer polaren Achse Materialien mit ionischen oder kovalenten Bindungen, Übergangsmetalloxide oder Polymere, eingesetzt sind, wobei das pyrokatalytische wirksame Material (13) einkristallin, teilkristallin oder auch polykristallin in Form eines Pulvers vorliegt oder auf ein Trägermaterial in Form einer Beschichtung oder in einer Matrix aufgebracht ist.

5. Vorrichtung nach Anspruch 1,
**dadurch gekennzeichnet,**
**dass** an den beiden gaspermeablen Stromkollektoren (2, 4) von Anode (21) und Kathode (22) jeweils zumindest eine Verbindungsleitung (26, 27) angeschlossen ist, die zu einem elektrischen Energieverbraucher (6) führt.

6. Vorrichtung nach Anspruch 1,
**dadurch gekennzeichnet,**
**dass** eine Schalt-/Steuereinheit (28) vorhanden ist, die in einer der beiden Verbindungsleitungen (26, 27) zur Abschaltung oder Zuschaltung des elektrischen Energieverbrauchers (6) eingebracht ist, wobei der elektrische Energieverbraucher (6) weitere elektrische Bauteile zur Formung eines elektrischen Stromes beinhalten kann.

7. Vorrichtung nach Anspruch 1,
**dadurch gekennzeichnet,**
**dass** der erste thermische Energieträger (24) mit hoher Temperatur T_{H} und der zweite thermische Energieträger (25) mit niedriger Temperatur T_{K} über ein Wegeventil (48) mit einer Steuer-/Schalteinheit/Regeleinrichtung (11) mit einer Durchflusseinheit (14) verbunden sind.

8. Vorrichtung nach Anspruch 1,
**dadurch gekennzeichnet,**
**dass** mit dem Wegeventil (48) mittels der Steuer-/Schalteinheit (11) der Zufluss des ersten thermischen Energieträgers (24) mit hoher Temperatur T_{H} und des zweiten thermischen Energieträgers (25) mit niedriger Temperatur T_{K} gesteuert bzw. geregelt wird, wobei die Steuer-/Schalteinheit (11) auch mit einer Temperatursteuer-/Temperaturkontrolleinheit verbunden ist.

9. Vorrichtung nach den Ansprüchen 1 bis 8,
**dadurch gekennzeichnet,**
**dass** das pyrokatalytisch wirksame Material (13) zumindest im Kontakt mit der Durchflusseinheit (14) steht, wobei die zeitlichen Temperaturänderungen ΔT/Δt in der Durchflusseinheit (14) zeitliche Temperaturänderungen ΔT/Δt im Pyroelektrikum (13) verursachen.

10. Vorrichtung nach Anspruch 1,
**dadurch gekennzeichnet,**
**dass** an das Fluidreservoir (17) ein Druckausgleichsbehälter (10) angebracht ist, der mit einem Absperrventil (9) mit Entlüftung verbunden ist.

11. Vorrichtung nach Anspruch 1,
**dadurch gekennzeichnet,**
**dass** im Fluidreservoir (17) ein Fluid (12) vorhanden ist, wobei das Fluid (12) eine Flüssigkeit oder ein Gas ist und zumindest eine fluide Komponente mit kovalent oder ionisch gebundenem Wasserstoff enthält.

12. Vorrichtung nach Anspruch 11,
**dadurch gekennzeichnet,**
**dass** das Fluid (12) durch das Absperrventil (9) geleitet wird, wobei das Fluid (12) den Druckausgleichbehälter (10) passiert und in das Fluidreservoir (17) übergeht.

13. Vorrichtung nach Anspruch 11,
**dadurch gekennzeichnet,**
**dass** das Absperrventil (9) den Zufluss des Fluids (12) steuert oder regelt, wobei das Absperrventil (9) wahlweise mit einer Steuer-/Kontrolleinheit verbunden ist.

14. Vorrichtung nach Anspruch 11,
**dadurch gekennzeichnet,**
**dass** das Absperrventil (9) den Druck im Druckausgleichsbehälter (10) durch Entlüftung steuert oder regelt, wobei das Absperrventil (9) wahlweise mit einer Steuer-/Kontrolleinheit verbunden ist.

15. Vorrichtung nach Anspruch 1,
**dadurch gekennzeichnet,**
**dass** ein Sauerstoff-Zugang (23) Sauerstoff O₂ oder Sauerstoffgemisch in die Brennstoffzelleneinheit (19) bringt, wobei der Sauerstoff O₂ am kathodenseitigen Katalysator (5) reduziert wird.

16. Vorrichtung nach Anspruch 15,
**dadurch gekennzeichnet,**
**dass** der Sauerstoff-Zugang (23) Sauerstoff O₂ oder Sauerstoffgemisch aus einer gasförmigen Umgebung oder aus anderen Quellen liefert, wobei der Sauerstoff-Zugang (23) wahlweise über die Steuer-/Kontrolleinheit gesteuert bzw. geregelt wird.

17. Vorrichtung nach Anspruch 1,
**dadurch gekennzeichnet,**
**dass** am Gasdiffusionskanal (18) ein Absperrventil (16) angebracht ist, wobei das Absperrventil (16) den Druck zwischen Fluidreservoir (17) und Brennstoffzelleneinheit (19) oder im Gasdiffusionskanal (18) steuert oder regelt, wobei das Absperrventil (16) wahlweise mit einer Steuer-/Kontrolleinheit verbunden ist.

18. Vorrichtung nach Anspruch 1,
**dadurch gekennzeichnet,**
**dass** am Gasdiffusionskanal (18) ein Absperrventil (16) angebracht ist, wobei über das Absperrventil (16) der Wasserstoff aus dem Gasdiffusionskanal (18) entnehmbar ist, wobei das Absperrventil (16) wahlweise mit einer Steuer-/Kontrolleinheit verbunden ist.

19. Vorrichtung nach Anspruch 1,
**dadurch gekennzeichnet,**
**dass** zwischen Gasdiffusionskanal (18) und Fluidreservoir (17) eine Gastrennungseinheit (15) angebracht ist.

20. Vorrichtung nach Anspruch 19,
**dadurch gekennzeichnet,**
**dass** die Gastrennungseinheit (15) Gasanteile des Fluids (12) auftrennt, wobei Wasserstoff in den Gasdiffusionskanal (18) übertritt und andere fluide Stoffe im Fluidreservoir (17) zurückgehalten werden.

21. Vorrichtung nach Anspruch 20,
**dadurch gekennzeichnet,**
**dass** an der Gastrennungseinheit (15) ein Absperrventil (7) zur Abführung des im Fluidreservoir (17) entstehenden Sauerstoffs angebracht ist.

22. Vorrichtung nach Anspruch 1,
**dadurch gekennzeichnet,**
**dass** der in der Gastrennungseinheit (15) aufgetrennte Sauerstoff O₂ über das Absperrventil (7) in einer Rück-/Abführleitung (8) zur Sauerstoffzufuhrleitung (23) oder in die Umgebung oder in Behälter geleitet wird, wobei die Rück-/Abführleitung (8) am Absperrventil (7) angebracht ist.

23. Vorrichtung nach Anspruch 1,
**dadurch gekennzeichnet,**
**dass** im Fluidreservoir (17) der thermische Energieträger (24) mit hoher Temperatur T_{H} in Form eines ersten Behälters (24) und der thermische Energieträger (25) mit niedriger Temperatur T_{K} in Form eines zweiten Behälters (25) räumlich voneinander getrennt sind.

24. Vorrichtung nach Anspruch 23,
**dadurch gekennzeichnet,**
**dass** mittels eines äußeren Wärmestroms (31) der im ersten Behälter (24) befindliche thermische Energieträger mit hoher Temperatur T_{H} erwärmt wird, wobei bei hoher Temperatur T_{H} die einstellbare Maximaltemperatur T_{Hmax} des pyrokatalytisch wirksamen Materials (13) unterhalb der Curie-Temperatur T_{C} des pyrokatalytisch wirksamen Materials (13) liegt.

25. Vorrichtung nach Anspruch 24,
**dadurch gekennzeichnet,**
**dass** die Trennung des thermischen Energieträgers (24) mit hoher Temperatur T_{H} und des thermischen Energieträgers (25) mit niedriger Temperatur T_{K} behälterbedingt durch einen thermischen Isolator (33) erfolgt, wobei der thermische Isolator (33) eine geringe Wärmekapazität und Wärmeleitfähigkeit besitzt und eine Wärmeleitung zwischen dem thermischen Energieträger (24) mit hoher Temperatur T_{H} und dem thermischen Energieträger (25) mit niedriger Temperatur T_{K} unterdrückt.

26. Vorrichtung nach Anspruch 25,
**dadurch gekennzeichnet,**
**dass** im thermischen Isolator (33) zumindest eine Dichtung (37) eingebracht ist, wobei die Dichtung (37) einen Temperaturausgleich zwischen dem thermischen Energieträger (24) mit hoher Temperatur T_{H} und dem thermischen Energieträger (25) mit niedriger Temperatur T_{K} unterdrückt und wobei die Dichtung (37) einen regel-/steuerbaren Materialdurchgang ermöglicht.

27. Vorrichtung nach Anspruch 1,
**dadurch gekennzeichnet,**
**dass** das pyrokatalytisch wirksame Material (13) als Band vorliegt oder als Schicht auf ein verformbares Trägermaterial (35) aufgebracht ist.

28. Vorrichtung nach Anspruch 27,
**dadurch gekennzeichnet,**
**dass** der mit pyrokatalytisch wirksamen Material (13) beschichtete Pyroelektrikum-Träger (35) durch Bandführungselemente (30) durch den thermischen Energieträger (24) mit hoher Temperatur T_{H} und den thermischen Energieträger (25) mit niedriger Temperatur T_{K} geführt ist, wobei die gerichtete Bewegung zeitliche Temperaturänderungen ΔT/Δt im pyrokatalytisch wirksamen Material (13) verursacht.

29. Vorrichtung nach den Ansprüchen 25 bis 28,
**dadurch gekennzeichnet,**
**dass** der mit dem pyrokatalytisch wirksamen Material (13) beschichtete Träger (35) ausschließlich durch Dichtungen (37) hindurch im thermischen Isolator (33) geführt ist, wobei der mit dem pyrokatalytisch wirksamen Material (13) beschichtete Träger (35) auch ausschließlich entlang des thermischen Isolators (33) geführt ist, wobei der mit pyrokatalytisch wirksamen Material (13) beschichtete Träger (35) entweder durch Dichtungen (37) hindurch im thermischen Isolator (33) oder entlang des thermischen Isolators (33) geführt ist.

30. Vorrichtung nach Anspruch 1,
**dadurch gekennzeichnet,**
**dass** das pyrokatalytisch wirksame Material (13) auf einem rotationssymmetrischen Körper (41) aufgebracht ist.

31. Vorrichtung nach Anspruch 30,
**dadurch gekennzeichnet,**
**dass** der mit pyrokatalytisch wirksamen Material (13) beschichtete rotationssymmetrische Körper (41) mit einer externen Bewegungseinheit (49) in Rotation versetzt wird.

32. Vorrichtung nach Anspruch 31,
**dadurch gekennzeichnet,**
**dass** zwischen dem mit pyrokatalytisch wirksamen Material (13) beschichteten rotationssymmetrischen Körper (41) und der räumlichen Begrenzung des Fluidreservoirs (17) Dichtungen (37) angebracht sind.

33. Vorrichtung nach Anspruch 32,
**dadurch gekennzeichnet,**
**dass** die Dichtungen (37) und der mit pyrokatalytisch wirksamen Material (13) beschichtete rotationssymmetrische Körper (41) eine räumliche Trennung des thermischen Energieträgers (24) mit hoher Temperatur T_{H} vom thermischen Energieträger (25) mit niedriger Temperatur T_{K} realisieren, wobei die Dichtungen (37) einen Temperaturausgleich zwischen dem thermischen Energieträger (24) mit hoher Temperatur T_{H} und dem thermischen Energieträger (25) mit niedriger Temperatur T_{K} unterdrücken.

34. Vorrichtung nach den Ansprüchen 30 bis 33,
**dadurch gekennzeichnet,**
**dass** optional die Energie zur Aufrechterhaltung der Bewegung des rotationssymmetrischen Körpers (41) oder die Energie zur Aufrechterhaltung der Bandführungselemente (30) oder die Energie zur Versorgung des Wegeventils (48) mit Schalt-/Steuereinheit (11) aus dem elektrischen Energieverbraucher (6) entnehmbar ist.

35. Vorrichtung (40) nach Anspruch 1,
**dadurch gekennzeichnet,**
**dass** die Vorrichtung (40) zum Umwandeln von thermischer Energie in chemische Energie und von chemischer Energie in elektrische Energie zumindest besteht aus
- einer zylinderartig mehrschichtig aufgebauten Brennstoffzelleneinheit (19), zu der zumindest gehören
- eine hohlzylinderförmige Anode (21) aus einem ersten gaspermeablen Stromkollektor (2) und einem anodenseitigen Katalysator (1),
- eine hohlzylinderförmige Kathode (22) aus einem zweiten gaspermeablen Stromkollektor (4) und einem kathodenseitigen Katalysator (5), wobei die Anode (21) von der Kathode (22) umgeben ist,
- ein zwischen der hohlzylinderförmigen Anode (21) und der hohlzylinderförmigen Kathode (22) befindlicher hohlzylinderförmig angeordneter Elektrolyt (3),
wobei sich zumindest die Anode (21), die Kathode (22) und der Elektrolyt (3) in einer hohlzylindrischen Kammer (47) befinden, und
- ein Sauerstoff-Zugang (23) zur hohlzylindrischen Kammer (47) für eine Zufuhr von Sauerstoff oder Sauerstoffgemisch an den anodenseitigen Katalysator (1),
- einem hohlzylinderartigen Fluidreservoir (17),
zu dem zumindest gehören
- ein axial mittig angeordnetes pyrokatalytisch wirksames Material (13) mit mindestens einer polaren Achse, das von dem hohlzylindrischen Fluidreservoir (17) umgeben ist,
- ein erster thermischer Energieträger (24) mit hoher Temperatur T_{H},
- ein zweiter thermischer Energieträger (25) mit niedriger Temperatur T_{K},
und
- einem Gasdiffusionskanal (18), der als Freiraum das Fluidreservoir (17) umgibt,
wobei die hohlzylinderförmige Kammer (47) der Brennstoffzelleneinheit (19) mit dem Fluidreservoir (17) über dem Gasdiffusionskanal (18) in Verbindung steht,
wobei das Fluidreservoir (17) zumindest das axial mittig angeordnete, stabförmige pyrokatalytisch wirksame Material (13) enthält, das zeitlichen Temperaturänderungen ΔT/Δt des durch das Fluidreservoir (17) strömenden Fluids (12) abwechselnd ausgesetzt ist, wobei die Temperaturänderung ΔT/Δt durch den alternierenden Wärmeübertrag über einen ersten thermischen Energieträger (24) mit hoher Temperatur T_{H} und einen zweiten thermischen Energieträger (25) mit niedriger Temperatur T_{K} am pyrokatalytisch wirksamen Material (13) zur Umwandlung von thermischer Energie in chemische Energie realisiert wird, wobei bei hoher Temperatur T_{H} eine einstellbare Maximaltemperatur T_{Hmax} des pyrokatalytisch wirksamen Materials (13) unterhalb dessen Curie-Temperatur T_{C} liegt,
wobei am pyrokatalytisch wirksamen Material (13) eine Reduktion oder Oxidation des Fluids (12) im Fluidreservoir (17) zu zumindest Wasserstoff als chemischem Energieträger stattfindet, wobei zumindest der Wasserstoff über eine wasserstoffdurchlässige und wasserabweisende hohlzylindrische Membran (39) in den Gasdiffusionskanal (18) vom Fluidreservoir (17) aus zum kathodenseitigen Katalysator (5) strömt, wobei zur Umwandlung der chemischen Energie in elektrische Energie eine Oxidation des Wasserstoffs am anodenseitigen Katalysator (1) der Brennstoffzelleneinheit (19) stattfindet, und
wobei zumindest im Gasdiffusionskanal (18) eine chemische Zwischenspeicherung möglich ist.

36. Verfahren zur Umwandlung von thermischer Energie in chemische Energie und von chemischer Energie in elektrische Energie mittels einer Vorrichtung (20, 29, 36, 38, 40) nach den Ansprüchen 1 bis 35,
**dadurch gekennzeichnet,**
**dass** folgende Schritte durchgeführt werden:
- Zuführung von thermischer Energie an ein pyrokatalytisch wirksames Material (13) mit mindestens einer polaren Achse mittels eines ersten thermischen Energieträgers (24) mit hoher Temperatur T_{H} und mittels eines zweiten thermischen Energieträgers (25) mit niedriger Temperatur T_{K}, wobei bei hoher Temperatur T_{H} eine einstellbare Maximaltemperatur T_{Hmax} des pyrokatalytisch wirksamen Materials (13) unterhalb dessen Curie-Temperatur T_{C} liegt, zur Umwandlung von thermischer Energie in chemische Energie,
- Herstellung von Wasserstoff durch Reaktion fluider Stoffe an dem pyrokatalytisch wirksamen Material (13) mit mindestens einer polaren Achse zu einer möglichen chemischen Zwischenspeicherung in einem Gasdiffusionskanal (18) und
- Reaktion des hergestellten, in dem Gasdiffusionskanal (18) befindlichen und zu einer Brennstoffzelleneinheit (19) geführten Wasserstoffs in der Brennstoffzelleneinheit (19) zur Generierung von elektrischem Strom.

37. Verfahren nach Anspruch 36,
**dadurch gekennzeichnet,**
**dass** der am pyrokatalytisch wirksamen Material (13) generierte Wasserstoff im Gasdiffusionskanal (18) aufgefangen und zu einer chemischen Zwischenspeicherung aufkonzentriert wird, wobei der Wasserstoff optional mittels einer Gasentnahmeeinheit (16) entnehmbar ist.

## Claims

1. Device (20, 29, 36, 38, 40) for converting thermal energy into chemical energy and chemical energy into electrical energy, comprising at least
- a fuel cell unit (19), which includes at least
- an anode (21) comprising a first gas-permeable current collector (2) and an anode-side catalyst (1),
- a cathode (22) comprising a second gas-permeable current collector (4) and a cathode-side catalyst (5),
- an electrolyte situated between the anode (21) and the cathode (22),
wherein at least the anode (21), the cathode (22) and the electrolyte (3) are situated in a chamber (47), and
- an oxygen inlet (23) to the chamber (47) for supplying oxygen or an oxygen mixture to the cathode-side catalyst (5),
- a fluid reservoir (17), which includes at least
- a pyrocatalytically active material (13) with at least one polar axis,
- a first thermal energy carrier (24) having a high temperature T_{H},
- a second thermal energy carrier (25) having a low temperature T_{K},
and
- a gas diffusion channel (18),
wherein the chamber (47) of the fuel cell unit (19) is connected to the fluid reservoir (17) via the gas diffusion channel (18),
wherein the fluid reservoir (17) contains at least the pyrocatalytically active material (13), which is subjected to changes of temperature over time ΔT/Δt, wherein the change of temperature ΔT/Δt is realized by means of an alternating heat transfer at the pyrocatalytically active material (13) via a first thermal energy carrier (24) having a high temperature T_{H} and a second thermal energy carrier having a low temperature T_{K} for the conversion of thermal energy into chemical energy, wherein for the high temperature T_{H} a settable maximum temperature T_{Hmax} of the pyrocatalytically active material (13) is lower than the Curie temperature T_{C} of the pyrocatalytically active material (13),
wherein at the pyrocatalytically active material (13) a reduction or oxidation of a fluid (12) in the fluid reservoir (17) to at least hydrogen as a chemical energy carrier takes place, wherein at least the hydrogen in the gas diffusion channel (18) flows from the fluid reservoir (17) to the anode-side catalyst (1), at which an oxidation of the hydrogen takes place for the conversion of chemical energy into electrical energy, and
wherein intermediate chemical storage is possible at least in the gas diffusion channel (18) as part of an arrangement (42, 43, 44, 45, 46) for intermediate storage.

2. Device according to Claim 1,
**characterized in that**
the anode (21) and the anode-side catalyst (1) and also the cathode (22) and the cathode-side catalyst (5) are made of the same material.

3. Device according to Claim 1,
**characterized in that**
the first thermal energy carrier (24) and the second thermal energy carrier (25) are identical, wherein the second thermal energy carrier (25) thermally fluctuates.

4. Device according to Claim 1,
**characterized in that**
materials with ionic or covalent bonds, transition metal oxides or polymers are used as the pyrocatalytically active material (13) with at least one polar axis, wherein the pyrocatalytically active material is present in a monocrystalline, semicrystalline or even polycrystalline state and in the form of a powder or is applied to a carrier material in the form of a coating or in a matrix.

5. Device according to Claim 1,
**characterized in that**
there is respectively at least one connecting line (26, 27) connected to the two gas-permeable current collectors (2, 4) of the anode (21) and the cathode (22), said line leading to an electrical energy consumer (6).

6. Device according to Claim 1,
**characterized in that**
a switching/control unit (28) is present, which is incorporated in one of the two connecting lines (26, 27) for switching off or switching on the electrical energy consumer (6), wherein the electrical energy consumer (6) may comprise further electrical components for the formation of an electric current.

7. Device according to Claim 1,
**characterized in that**
the first thermal energy carrier (24) having a high temperature T_{H} and the second thermal energy carrier (25) having a low temperature T_{K} are connected to a through-flow unit (14) via a directional valve (48) with a control/switching unit/regulating device (11).

8. Device according to Claim 1,
**characterized in that**
the incoming flow of the first thermal energy carrier (24) having a high temperature T_{H} and of the second thermal energy carrier (25) having a low temperature T_{K} is controlled or regulated by the directional valve (48) by means of the control/switching unit (11), wherein the control/switching unit (11) is also connected to a temperature-control/temperaturemonitoring unit.

9. Device according to Claims 1 to 8,
**characterized in that**
the pyrocatalytically active material (13) is at least in contact with the through-flow unit (14), wherein the changes of temperature over time ΔT/Δt in the through-flow unit (14) induce changes of temperature over time ΔT/Δt in the pyroelectric material (13).

10. Device according to Claim 1,
**characterized in that**
a pressure equalization vessel (10) is fitted to the fluid reservoir (17) and is connected to a shut-off valve (9) with venting.

11. Device according to Claim 1,
**characterized in that**
a fluid (12) is present in the fluid reservoir (17), wherein the fluid (12) is a liquid or a gas and contains at least one fluid component with covalently or ionically bound hydrogen.

12. Device according to Claim 11,
**characterized in that**
the fluid (12) is guided through the shut-off valve (9), wherein the fluid (12) passes the pressure equalization vessel (10) and goes over into the fluid reservoir (17).

13. Device according to Claim 11,
**characterized in that**
the shut-off valve (9) controls or regulates the incoming flow of the fluid (12), wherein the shut-off valve (9) is optionally connected to a control/monitoring unit.

14. Device according to Claim 11,
**characterized in that**
the shut-off valve (9) controls or regulates the pressure in the pressure equalization vessel (10) by means of venting, wherein the shut-off valve (9) is optionally connected to a control/monitoring unit.

15. Device according to Claim 1,
**characterized in that**
an oxygen inlet (23) brings oxygen O₂ or an oxygen mixture into the fuel cell unit (19), wherein the oxygen O₂ is reduced at the cathode-side catalyst (5).

16. Device according to Claim 15,
**characterized in that**
the oxygen inlet (23) delivers oxygen O₂ or an oxygen mixture from a gaseous environment or from other sources, wherein the oxygen inlet (23) is optionally controlled or regulated via the control/monitoring unit.

17. Device according to Claim 1,
**characterized in that**
a shut-off valve (16) is fitted to the gas diffusion channel (18), wherein the shut-off valve (16) controls or regulates the pressure between the fluid reservoir (17) and the fuel cell unit (19) or in the gas diffusion channel (18), wherein the shut-off valve (16) is optionally connected to a control/monitoring unit.

18. Device according to Claim 1,
**characterized in that**
a shut-off valve (16) is fitted to the gas diffusion channel (18), wherein the hydrogen can be removed from the gas diffusion channel (18) via the shut-off valve (16), wherein the shut-off valve (16) is optionally connected to a control/monitoring unit.

19. Device according to Claim 1,
**characterized in that**
a gas separation unit (15) is fitted between the gas diffusion channel (18) and the fluid reservoir (17).

20. Device according to Claim 19,
**characterized in that**
the gas separation unit (15) separates gas fractions of the fluid (12), wherein hydrogen passes over into the gas diffusion channel (18) and other fluid substances are retained in the fluid reservoir (17).

21. Device according to Claim 20,
**characterized in that**
a shut-off valve (7) for discharging the oxygen formed in the fluid reservoir (17) is fitted to the gas separation unit (15).

22. Device according to Claim 1,
**characterized in that**
the oxygen O₂ separated in the gas separation unit (15) is guided via the shut-off valve (7) in a return/discharge line (8) to the oxygen supply line (23) or into the environment or into vessels, wherein the return/discharge line (8) is fitted to the shut-off valve (7).

23. Device according to Claim 1,
**characterized in that**
in the fluid reservoir (17) the thermal energy carrier (24) having a high temperature T_{H} in the form of a first vessel (24) and the thermal energy carrier (25) having a low temperature T_{K} in the form of a second vessel (25) are spatially separated from one another.

24. Device according to Claim 23,
**characterized in that**
the thermal energy carrier having a high temperature T_{H} that is situated in the first vessel (24) is heated by means of an external heat flow (31), wherein for the high temperature T_{H} the settable maximum temperature T_{Hmax} of the pyrocatalytically active material (13) is lower than the Curie temperature T_{C} of the pyrocatalytically active material (13).

25. Device according to Claim 24,
**characterized in that**
the separation of the thermal energy carrier (24) having a high temperature T_{H} and the thermal energy carrier (25) having a low temperature T_{K} is realized by means of a thermal insulator (33) due to the vessels, wherein the thermal insulator (33) has a low heat capacity and heat conductivity and suppresses heat conduction between the thermal energy carrier (24) having a high temperature T_{H} and the thermal energy carrier (25) having a low temperature T_{K}.

26. Device according to Claim 25,
**characterized in that**
at least one seal (37) is incorporated in the thermal insulator (33), wherein the seal (37) suppresses temperature equalization between the thermal energy carrier (24) having a high temperature T_{H} and the thermal energy carrier (25) having a low temperature T_{K} and wherein the seal (37) allows a passage of material that can be regulated/controlled.

27. Device according to Claim 1,
**characterized in that**
the pyrocatalytically active material (13) is present as a strip or is applied as a layer to a deformable carrier material (35).

28. Device according to Claim 27,
**characterized in that**
the pyroelectric carrier (35) coated with pyrocatalytically active material (13) is guided by strip guiding elements (30) through the thermal energy carrier (24) having a high temperature T_{H} and the thermal energy carrier (25) having a low temperature T_{K}, wherein the directed movement induces changes of temperature over time ΔT/Δt in the pyrocatalytically active material (13).

29. Device according to Claims 25 to 28,
**characterized in that**
the carrier (35) coated with the pyrocatalytically active material (13) is exclusively guided through seals (37) in the thermal insulator (33), wherein the carrier (35) coated with the pyrocatalytically active material (13) is also exclusively guided along the thermal insulator (33), wherein the carrier (35) coated with the pyrocatalytically active material (13) is either guided through seals (37) in the thermal insulator (33) or along the thermal insulator (33).

30. Device according to Claim 1,
**characterized in that**
the pyrocatalytically active material (13) is applied to a rotationally symmetrical body (41).

31. Device according to Claim 30,
**characterized in that**
the rotationally symmetrical body (41) coated with pyrocatalytically active material (13) is set in rotation by an external movement unit (49).

32. Device according to Claim 31,
**characterized in that**
seals (37) are fitted between the rotationally symmetrical body (41) coated with pyrocatalytically active material (13) and the spatial boundary of the fluid reservoir (17).

33. Device according to Claim 32,
**characterized in that**
the seals (37) and the rotationally symmetrical body (41) coated with pyrocatalytically active material (13) realize a spatial separation of the thermal energy carrier (24) having a high temperature T_{H} and the thermal energy carrier (25) having a low temperature T_{K}, wherein the seals (37) suppress temperature equalization between the thermal energy carrier (24) having a high temperature T_{H} and the thermal energy carrier (25) having a low temperature T_{K}.

34. Device according to Claims 30 to 33,
**characterized in that**
the energy for maintaining the movement of the rotationally symmetrical body (41) or the energy for maintaining the strip guiding elements (30) or the energy for supplying the directional valve (48) with switching/control unit (11) can optionally be taken from the electrical energy consumer (6).

35. Device (40) according to Claim 1,
**characterized in that**
the device (40) for converting thermal energy into chemical energy and chemical energy into electrical energy comprises at least
- a fuel cell unit (19) of cylinder-like multi-layer construction, which includes at least
- a hollow-cylindrical anode (21) comprising a first gas-permeable current collector (2) and an anode-side catalyst (1),
- a hollow-cylindrical cathode (22) comprising a second gas-permeable current collector (4) and a cathode-side catalyst (5), wherein the anode (21) is surrounded by the cathode (22),
- an electrolyte (3) situated between the hollow-cylindrical anode (21) and the hollow-cylindrical cathode (22) and arranged in a hollow-cylindrical manner,
wherein at least the anode (21), the cathode (22) and the electrolyte (3) are situated in a hollow-cylindrical chamber (47), and
- an oxygen inlet (23) to the hollow-cylindrical chamber (47) for supplying oxygen or an oxygen mixture to the anode-side catalyst (1),
- a hollow-cylinder-like fluid reservoir (17), which includes at least
- an axially centrally arranged, pyrocatalytically active material (13) with at least one polar axis and surrounded by the hollow-cylindrical fluid reservoir (17),
- a first thermal energy carrier (24) having a high temperature T_{H},
- a second thermal energy carrier (25) having a low temperature T_{K},
and
- a gas diffusion channel (18) which surrounds the fluid reservoir (17) as a cavity,
wherein the hollow-cylindrical chamber (47) of the fuel cell unit (19) is connected to the fluid reservoir (17) via the gas diffusion channel (18),
wherein the fluid reservoir (17) contains at least the axially centrally arranged, rod-shaped, pyrocatalytically active material (13), which is subjected, in an alternating manner, to changes of temperature over time ΔT/Δt of the fluid (12) flowing through the fluid reservoir (17), wherein the change of temperature ΔT/Δt is realized by means of the alternating heat transfer at the pyrocatalytically active material (13) via a first thermal energy carrier (24) having a high temperature T_{H} and a second thermal energy carrier having a low temperature T_{K} for the conversion of thermal energy into chemical energy, wherein for the high temperature T_{H} a settable maximum temperature T_{Hmax} of the pyrocatalytically active material (13) is lower than the Curie temperature T_{C} of the said material,
wherein at the pyrocatalytically active material (13) a reduction or oxidation of the fluid (12) in the fluid reservoir (17) to at least hydrogen as a chemical energy carrier takes place, wherein at least the hydrogen flows from the fluid reservoir (17) into the gas diffusion channel (18) via a hydrogen-permeable and water-repellent hollow-cylindrical membrane (39) and to the cathode-side catalyst (5), wherein an oxidation of the hydrogen takes place at the anode-side catalyst (1) of the fuel cell unit (19) for the conversion of chemical energy into electrical energy, and
wherein intermediate chemical storage is possible at least in the gas diffusion channel (18).

36. Method for converting thermal energy into chemical energy and chemical energy into electrical energy by means of a device (20, 29, 36, 38, 40) according to Claims 1 to 35,
**characterized in that**
the following steps are performed:
- supplying of thermal energy to a pyrocatalytically active material (13) with at least one polar axis by means of a first thermal energy carrier (24) having a high temperature T_{H} and by means of a second thermal energy carrier (25) having a low temperature T_{K}, wherein for the high temperature T_{H} a settable maximum temperature T_{Hmax} of the pyrocatalytically active material (13) is lower than the Curie temperature T_{C} of the said material, for the conversion of thermal energy into chemical energy,
- producing of hydrogen through reaction of fluid substances at the pyrocatalytically active material (13) with at least one polar axis for possible intermediate chemical storage in a gas diffusion channel (18) and
- reacting of the produced hydrogen, which is situated in the gas diffusion channel (18) and is guided to a fuel cell unit (19), in the fuel cell unit (19) for the generation of electric current.

37. Method according to Claim 36,
**characterized in that**
the hydrogen generated at the pyrocatalytically active material (13) is collected in the gas diffusion channel (18) and concentrated for intermediate chemical storage, wherein the hydrogen can optionally be removed by means of a gas removal unit (16).

## Revendications

1. Dispositif (20, 29, 36, 38, 40) pour la transformation d'énergie thermique en énergie chimique et d'énergie chimique en énergie électrique, constitué par au moins :
- une unité de pile à combustible (19),
qui comprend au moins
- une anode (21) constituée par un premier collecteur de courant perméable aux gaz (2) et un catalyseur du côté de l'anode (1),
- une cathode (22) constituée par un second collecteur de courant perméable aux gaz (4) et un catalyseur du côté de la cathode (5),
- un électrolyte (3) qui se trouve entre l'anode (21) et la cathode (22),
au moins l'anode (21), la cathode (22) et l'électrolyte (3) se trouvant dans une chambre (47), et
- une entrée d'oxygène (23) dans la chambre (47) pour un apport d'oxygène ou d'un mélange d'oxygène au catalyseur du côté de la cathode (5),
- un réservoir de fluide (17),
qui comprend au moins
- un matériau à effet pyrocatalytique (13) présentant au moins un axe polaire,
- un premier vecteur d'énergie thermique (24) ayant une température élevée T_{H},
- un second vecteur d'énergie thermique (25) ayant une température basse T_{K},
et
- un canal de diffusion de gaz (18),
la chambre (47) de l'unité de pile à combustible (19) étant raccordée avec le réservoir de fluide (17) par le canal de diffusion de gaz (18),
le réservoir de fluide (17) contenant au moins le matériau à effet pyrocatalytique (13), qui est exposé à des variations temporelles de la température ΔT/Δt, la variation de température ΔT/Δt étant réalisée par un transfert de chaleur alterné par un premier vecteur d'énergie thermique (24) ayant une température élevée T_{H} et un second vecteur d'énergie thermique (25) ayant une température basse T_{K} sur le matériau à effet pyrocatalytique (13) pour la transformation d'énergie thermique en énergie chimique, une température maximale ajustable T_{Hmax} du matériau à effet pyrocatalytique (13) étant inférieure à la température de Curie T_{c} du matériau à effet pyrocatalytique (13) à la température élevée T_{H}, une réduction ou une oxydation d'un fluide (12) dans le réservoir de fluide (17) au moins en hydrogène en tant que vecteur d'énergie chimique ayant lieu sur le matériau à effet pyrocatalytique (13), au moins l'hydrogène s'écoulant dans le canal de diffusion de gaz (18) depuis le réservoir de fluide (17) vers le catalyseur du côté de l'anode (1), sur lequel une oxydation de l'hydrogène a lieu pour la transformation de l'énergie chimique en énergie électrique, et
un stockage chimique étant possible au moins dans le canal de diffusion de gaz (18) en tant que partie d'un agencement (42, 43, 44, 45, 46) pour le stockage.

2. Dispositif selon la revendication 1, **caractérisé en ce que** l'anode (21) et le catalyseur du côté de l'anode (1), ainsi que la cathode (22) et le catalyseur du côté de la cathode (5) sont constitués du même matériau.

3. Dispositif selon la revendication 1, **caractérisé en ce que** le premier vecteur d'énergie thermique (24) et le second vecteur d'énergie thermique (25) sont identiques, le second vecteur d'énergie thermique (25) fluctuant thermiquement.

4. Dispositif selon la revendication 1, **caractérisé en ce que** des matériaux contenant des liaisons ioniques ou covalentes, des oxydes de métaux de transition ou des polymères sont utilisés en tant que matériau à effet pyrocatalytique (13) présentant au moins un axe polaire, le matériau à effet pyrocatalytique (13) se présentant sous forme monocristalline, partiellement cristalline ou également polycristalline sous la forme d'une poudre, ou étant appliqué sur un matériau support sous la forme d'un revêtement ou dans une matrice.

5. Dispositif selon la revendication 1, **caractérisé en ce qu'**au moins une interconnexion (26, 27), qui conduit à un utilisateur d'énergie électrique (6), est raccordée à chacun des deux collecteurs de courant perméables aux gaz (2, 4) de l'anode (21) et de la cathode (22).

6. Dispositif selon la revendication 1, **caractérisé en ce qu'**une unité de commutation/commande (28) est présente, qui est disposée dans une des deux interconnexions (26, 27) pour la mise hors ou en circuit de l'utilisateur d'énergie électrique (6), l'utilisateur d'énergie électrique (6) pouvant contenir d'autres composants électriques pour la formation d'un courant électrique.

7. Dispositif selon la revendication 1, **caractérisé en ce que** le premier vecteur d'énergie thermique (24) ayant une température élevée T_{H} et le second vecteur d'énergie thermique (25) ayant une température basse T_{K} sont reliés par un distributeur (48) avec une unité de commande/commutation/dispositif de régulation (11) avec une unité à écoulement (14).

8. Dispositif selon la revendication 1, **caractérisé en ce qu'**avec le distributeur (48), au moyen de l'unité de commande/commutation (11), le débit entrant du premier vecteur d'énergie thermique (24) ayant une température élevée T_{H} et du second vecteur d'énergie thermique (25) ayant une température basse T_{K} est commandé ou régulé, l'unité de commande/commutation (11) étant également reliée avec une unité de commande de la température/contrôle de la température.

9. Dispositif selon les revendications 1 à 8, **caractérisé en ce que** le matériau à effet pyrocatalytique (13) est au moins en contact avec l'unité d'écoulement (14), les variations temporelles de la température ΔT/Δt dans l'unité d'écoulement (14) provoquant des variations temporelles de la température ΔT/Δt dans le matériau pyroélectrique (13).

10. Dispositif selon la revendication 1, **caractérisé en ce qu'**un contenant d'égalisation de la pression (10), qui est relié avec une valve d'arrêt (9) avec aération, est disposé dans le réservoir de fluide (17).

11. Dispositif selon la revendication 1, **caractérisé en ce qu'**un fluide (12) est présent dans le réservoir de fluide (17), le fluide (12) étant un liquide ou un gaz et contenant au moins un composant fluide qui contient de l'hydrogène relié par une liaison covalente ou ionique.

12. Dispositif selon la revendication 11, **caractérisé en ce que** le fluide (12) est conduit dans la valve d'arrêt (9), le fluide (12) franchissant le contenant d'égalisation de la pression (10) et passant dans le réservoir de fluide (17).

13. Dispositif selon la revendication 11, **caractérisé en ce que** la valve d'arrêt (9) commande ou régule le débit entrant du fluide (12), la valve d'arrêt (9) étant éventuellement reliée avec une unité de commande/contrôle.

14. Dispositif selon la revendication 11, **caractérisé en ce que** la valve d'arrêt (9) commande ou régule la pression dans le contenant d'égalisation de la pression (10) par aération, la valve d'arrêt (9) étant éventuellement reliée avec une unité de commande/contrôle.

15. Dispositif selon la revendication 1, **caractérisé en ce qu'**une entrée d'oxygène (23) introduit de l'oxygène O₂ ou un mélange d'oxygène dans l'unité de pile à combustible (19), l'oxygène O₂ étant réduit sur le catalyseur du côté de la cathode (5).

16. Dispositif selon la revendication 15, **caractérisé en ce que** l'entrée d'oxygène (23) fournit de l'oxygène O₂ ou un mélange d'oxygène à partir d'un environnement gazeux ou d'autres sources, l'entrée d'oxygène (23) étant éventuellement commandée ou régulée par l'unité de commande/contrôle.

17. Dispositif selon la revendication 1, **caractérisé en ce qu'**une valve d'arrêt (16) est disposée sur le canal de diffusion de gaz (18), la valve d'arrêt (16) commandant ou régulant la pression entre le réservoir de fluide (17) et l'unité de pile à combustible (19) ou dans le canal de diffusion de gaz (18), la valve d'arrêt (16) étant éventuellement reliée avec une unité de commande/contrôle.

18. Dispositif selon la revendication 1, **caractérisé en ce qu'**une valve d'arrêt (16) est disposée sur le canal de diffusion de gaz (18), l'hydrogène pouvant être soutiré du canal de diffusion de gaz (18) par la valve d'arrêt (16), la valve d'arrêt (16) étant éventuellement reliée avec une unité de commande/contrôle.

19. Dispositif selon la revendication 1, **caractérisé en ce qu'**une unité de séparation de gaz (15) est disposée entre le canal de diffusion de gaz (18) et le réservoir de fluide (17).

20. Dispositif selon la revendication 19, **caractérisé en ce que** l'unité de séparation de gaz (15) sépare des fractions gazeuses du fluide (12), l'hydrogène passant dans le canal de diffusion de gaz (18) et d'autres substances fluides étant retenues dans le réservoir de fluide (17).

21. Dispositif selon la revendication 20, **caractérisé en ce qu'**une valve d'arrêt (7) pour le déchargement de l'oxygène formé dans le réservoir de fluide (17) est disposée dans l'unité de séparation de gaz (15).

22. Dispositif selon la revendication 1, **caractérisé en ce que** l'oxygène O₂ séparé dans l'unité de séparation de gaz (15) est conduit par le biais de la valve d'arrêt (7) dans une conduite de recyclage/déchargement (8) vers la conduite d'alimentation d'oxygène (23) ou dans l'environnement ou dans un contenant, la conduite de recyclage/déchargement (8) étant disposée sur la valve d'arrêt (7).

23. Dispositif selon la revendication 1, **caractérisé en ce que**, dans le réservoir de fluide (17), le vecteur d'énergie thermique (24) ayant une température élevée T_{H} sous la forme d'un premier contenant (24) et le vecteur d'énergie thermique (25) ayant une température basse T_{K} sous la forme d'un second contenant (25) sont séparés l'un de l'autre dans l'espace.

24. Dispositif selon la revendication 23, **caractérisé en ce que** le vecteur d'énergie thermique ayant une température élevée T_{H} se trouvant dans le premier contenant (24) est chauffé au moyen d'un courant de chaleur extérieur (31), la température maximale ajustable T_{Hmax} du matériau à effet pyrocatalytique (13) étant inférieure à la température de Curie T_{C} du matériau à effet pyrocatalytique (13) à la température élevée T_{H}.

25. Dispositif selon la revendication 24, **caractérisé en ce que** la séparation du vecteur d'énergie thermique (24) ayant une température élevée T_{H} et du vecteur d'énergie thermique (25) ayant une température basse T_{K} dans des contenants a lieu par un isolateur thermique (33), l'isolateur thermique (33) présentant une faible capacité calorifique et conductivité thermique, et empêchant une conduction de chaleur entre le vecteur d'énergie thermique (24) ayant une température élevée T_{H} et le vecteur d'énergie thermique (25) ayant une température basse T_{K}.

26. Dispositif selon la revendication 25, **caractérisé en ce qu'**au moins un joint (37) est disposé dans l'isolateur thermique (33), le joint (37) empêchant une égalisation de température entre le vecteur d'énergie thermique (24) ayant une température élevée T_{H} et le vecteur d'énergie thermique (25) ayant une température basse T_{K}, et le joint (37) permettant une transition de matériau régulable/commandable.

27. Dispositif selon la revendication 1, **caractérisé en ce que** le matériau à effet pyrocatalytique (13) se présente sous la forme d'une bande ou est appliqué sous la forme d'une couche sur un matériau support déformable (35).

28. Dispositif selon la revendication 27, **caractérisé en ce que** le support pyroélectrique (35) revêtu avec le matériau à effet pyrocatalytique (13) est conduit par des éléments de guidage de bande (30) au travers du vecteur d'énergie thermique (24) ayant une température élevée T_{H} et du vecteur d'énergie thermique (25) ayant une température basse T_{K}, le déplacement orienté provoquant des variations temporelles de la température ΔT/Δt dans le matériau à effet pyrocatalytique (13).

29. Dispositif selon les revendications 25 à 28, **caractérisé en ce que** le support (35) revêtu avec le matériau à effet pyrocatalytique (13) est conduit exclusivement par des joints (37) dans l'isolateur thermique (33), le support (35) revêtu avec le matériau à effet pyrocatalytique (13) étant également conduit exclusivement le long de l'isolateur thermique (33), le support (35) revêtu avec le matériau à effet pyrocatalytique (13) étant soit conduit par des joints (37) dans l'isolateur thermique (33), soit le long de l'isolateur thermique (33).

30. Dispositif selon la revendication 1, **caractérisé en ce que** le matériau à effet pyrocatalytique (13) est appliqué sur un corps symétrique par rotation (41).

31. Dispositif selon la revendication 30, **caractérisé en ce que** le corps symétrique par rotation (41) revêtu avec le matériau à effet pyrocatalytique (13) est mis en rotation avec une unité de déplacement externe (49).

32. Dispositif selon la revendication 31, **caractérisé en ce que** des joints (37) sont appliqués entre le corps symétrique par rotation (41) revêtu avec le matériau à effet pyrocatalytique (13) et la limite spatiale du réservoir de fluide (17).

33. Dispositif selon la revendication 32, **caractérisé en ce que** les joints (37) et le corps symétrique par rotation (41) revêtu avec le matériau à effet pyrocatalytique (13) réalisent une séparation dans l'espace du vecteur d'énergie thermique (24) ayant une température élevée T_{H} du vecteur d'énergie thermique (25) ayant une température basse T_{K}, les joints (37) empêchant une égalisation de température entre le vecteur d'énergie thermique (24) ayant une température élevée T_{H} et le vecteur d'énergie thermique (25) ayant une température basse T_{K}.

34. Dispositif selon les revendications 30 à 33, **caractérisé en ce que** l'énergie pour le maintien du déplacement du corps symétrique par rotation (41) ou l'énergie pour le maintien des éléments de guidage de bande (30) ou l'énergie pour l'alimentation du distributeur (48) peut éventuellement être extraite de l'utilisateur d'énergie électrique (6) avec une unité de commutation/commande (11).

35. Dispositif (40) selon la revendication 1, **caractérisé en ce que** le dispositif (40) pour la transformation d'énergie thermique en énergie chimique et d'énergie chimique en énergie électrique est au moins constitué par :
- une unité de pile à combustible (19) construite sous forme cylindrique multicouche,
qui comprend au moins
- une anode en forme de cylindre creux (21) constituée par un premier collecteur de courant perméable aux gaz (2) et un catalyseur du côté de l'anode (1),
- une cathode en forme de cylindre creux (22) constituée par un second collecteur de courant perméable aux gaz (4) et un catalyseur du côté de la cathode (5), l'anode (21) étant entourée par la cathode (22),
- un électrolyte (3) agencé sous la forme d'un cylindre creux, qui se trouve entre l'anode en forme de cylindre creux (21) et la cathode en forme de cylindre creux (22),
au moins l'anode (21), la cathode (22) et l'électrolyte (3) se trouvant dans une chambre cylindrique creuse (47), et
- une entrée d'oxygène (23) dans la chambre cylindrique creuse (47) pour un apport d'oxygène ou d'un mélange d'oxygène au catalyseur du côté de l'anode (1),
- un réservoir de fluide cylindrique creux (17),
qui comprend au moins
- un matériau à effet pyrocatalytique (13) agencé axialement au centre, présentant au moins un axe polaire, qui est entouré par le réservoir de fluide cylindrique creux (17),
- un premier vecteur d'énergie thermique (24) ayant une température élevée T_{H},
- un second vecteur d'énergie thermique (25) ayant une température basse T_{K},
et
- un canal de diffusion de gaz (18), qui entoure le réservoir de fluide (17) sous la forme d'un espace libre, la chambre cylindrique creuse (47) de l'unité de pile à combustible (19) étant raccordée avec le réservoir de fluide (17) par le canal de diffusion de gaz (18),
le réservoir de fluide (17) contenant au moins le matériau à effet pyrocatalytique (13) en forme de bâton, agencé axialement au centre, qui est exposé en alternance à des variations temporelles de la température ΔT/Δt du fluide (12) s'écoulant dans le réservoir de fluide (17), la variation de température ΔT/Δt étant réalisée par le transfert de chaleur alterné par un premier vecteur d'énergie thermique (24) ayant une température élevée T_{H} et un second vecteur d'énergie thermique (25) ayant une température basse T_{K} sur le matériau à effet pyrocatalytique (13) pour la transformation d'énergie thermique en énergie chimique, une température maximale ajustable T_{Hmax} du matériau à effet pyrocatalytique (13) étant inférieure à sa température de Curie T_{c} à la température élevée T_{H},
une réduction ou une oxydation du fluide (12) dans le réservoir de fluide (17) au moins en hydrogène en tant que vecteur d'énergie chimique ayant lieu sur le matériau à effet pyrocatalytique (13), au moins l'hydrogène s'écoulant au travers d'une membrane cylindrique creuse perméable à l'hydrogène et repoussant l'eau (39) dans le canal de diffusion de gaz (18) depuis le réservoir de fluide (17) vers le catalyseur du côté de la cathode (5), une oxydation de l'hydrogène ayant lieu sur le catalyseur du côté de l'anode (1) de l'unité de pile à combustible (19) pour la transformation de l'énergie chimique en énergie électrique, et
un stockage chimique étant possible au moins dans le canal de diffusion de gaz (18).

36. Procédé de transformation d'énergie thermique en énergie chimique et d'énergie chimique en énergie électrique au moyen d'un dispositif (20, 29, 36, 38, 40) selon les revendications 1 à 35, **caractérisé en ce que** les étapes suivantes sont réalisées :
- l'apport d'énergie thermique à un matériau à effet pyrocatalytique (13) présentant au moins un axe polaire au moyen d'un premier vecteur d'énergie thermique (24) ayant une température élevée T_{H} et au moyen d'un second vecteur d'énergie thermique (25) ayant une température basse T_{K}, une température maximale ajustable T_{Hmax} du matériau à effet pyrocatalytique (13) étant inférieure à sa température de Curie T_{c} à la température élevée T_{H}, pour la transformation d'énergie thermique en énergie chimique,
- la fabrication d'hydrogène par réaction de substances fluides sur le matériau à effet pyrocatalytique (13) présentant au moins un axe polaire pour un stockage chimique possible dans un canal de diffusion de gaz (18), et
- la réaction de l'hydrogène fabriqué, se trouvant dans le canal de diffusion de gaz (18) et conduit vers une unité de pile à combustible (19) dans l'unité de pile à combustible (19) pour la génération d'un courant électrique.

37. Procédé selon la revendication 36, **caractérisé en ce que** l'hydrogène généré sur le matériau à effet pyrocatalytique (13) est recueilli dans le canal de diffusion de gaz (18) et concentré dans un stockage chimique, l'hydrogène pouvant éventuellement être soutiré au moyen d'une unité de soutirage de gaz (16).
